# EUROPEAN PATENT APPLICATION

(11) **EP 4 561 033 A1**
(43) Date of publication of application: **28.05.2025**
(21) Application number: 23870360.7
(22) Date of filing: 14.09.2023
(51) Int. Cl.: H04M 1/02, G06F 1/16, G09F 9/30

(54) **ELECTRONIC APPARATUS AND FOLDING ASSEMBLY**

(30) Priority: 29.09.2022 CN 202211200529
(71) Applicant: Huawei Technologies Co., Ltd., Shenzhen, Guangdong 518129 (CN)
(72) Inventor: XU, Haibo, Shenzhen, Guangdong 518129 (CN); JIANG, Tiezhu, Shenzhen, Guangdong 518129 (CN); XING, Chong, Shenzhen, Guangdong 518129 (CN); XING, Tianyi, Shenzhen, Guangdong 518129 (CN)
(74) Representative: Pfenning, Meinig & Partner mbB
(86) International application number: PCT/CN2023/118795
(87) International publication number: WO 2024/067124

(57) **Abstract**

An electronic device and a foldable assembly are provided. The foldable assembly of the electronic device includes a first connecting rod, a second connecting rod, a third connecting rod, and a base. One end of the first connecting rod is rotatably connected to the base, the other end of the first connecting rod is rotatably connected to the second connecting rod, one end of the third connecting rod is rotatably connected to the base, and the other end of the third connecting rod is rotatably connected to the second connecting rod. The foldable assembly further includes a fourth connecting rod, a fifth connecting rod, and a sixth connecting rod. One end of the fourth connecting rod is rotatably connected to the base, and the other end of the fourth connecting rod is rotatably connected to the fifth connecting rod. One end of the sixth connecting rod is rotatably connected to the base, and the other end of the six connecting rod is rotatably connected to the fifth connecting rod. The foldable assembly of the electronic device implements unfolding or folding of the electronic device via a connecting rod assembly, and can accurately control motion of the electronic device. In addition, the connecting rod assembly has a simple structure, so that manufacturing costs of the electronic device can be reduced while ensuring precise motion of the electronic device.

## Description

This application claims priority to Chinese Patent Application No. 202211200529.9, filed with the China National Intellectual Property Administration on September 29, 2022 and entitled "ELECTRONIC DEVICE AND FOLDABLE ASSEMBLY", which is incorporated herein by reference in its entirety.

### TECHNICAL FIELD

This application relates to the field of foldable electronic product technologies, and in particular, to an electronic device and a foldable assembly.

### BACKGROUND

In recent years, flexible displays are widely used in various foldable electronic devices because of characteristics such as lightness, thinness, and non-fragileness. A foldable electronic device includes a body configured to carry a flexible display. The body generally includes two body parts and a foldable structure connected between the two body parts. The two body parts are folded or unfolded relative to each other through deformation of the foldable structure, and drive the flexible display to fold or unfold. However, it is difficult to accurately control motion of the electronic device via an existing foldable structure, and the existing foldable structure is complex, resulting in high manufacturing costs of the electronic device.

### SUMMARY

An objective of embodiments of this application is to provide an electronic device and a foldable assembly. The foldable assembly of the electronic device implements unfolding or folding of the electronic device via a connecting rod assembly, and can accurately control motion of the electronic device. In addition, the connecting rod assembly has a simple structure, so that manufacturing costs of the electronic device can be reduced while ensuring precise motion of the electronic device.

According to a first aspect, embodiments of this application provide an electronic device. The electronic device provided in this embodiment of this application includes a first body part, a second body part, and a foldable assembly. The foldable assembly is connected between the first body part and the second body part, and the first body part and the second body part are capable of being unfolded or folded relative to each other via the foldable assembly. The foldable assembly includes a first connecting rod, a second connecting rod, a third connecting rod, and a base, where the first body part is fastened to the second connecting rod or the third connecting rod, one end of the first connecting rod is rotatably connected to a first position of the base, the other end of the first connecting rod is rotatably connected to a first position of the second connecting rod, one end of the third connecting rod is rotatably connected to a second position of the base, the other end of the third connecting rod is rotatably connected to a second position of the second connecting rod, the first position of the base is different from the second position of the base, and the first position of the second connecting rod is different from the second position of the second connecting rod.

The foldable assembly further includes a fourth connecting rod, a fifth connecting rod, and a sixth connecting rod, where the second body part is fastened to the fourth connecting rod or the fifth connecting rod, one end of the fourth connecting rod is rotatably connected to a third position of the base, the other end of the fourth connecting rod is rotatably connected to a first position of the fifth connecting rod, one end of the sixth connecting rod is rotatably connected to a fourth position of the base, the other end of the sixth connecting rod is rotatably connected to a second position of the fifth connecting rod, the third position of the base is different from the fourth position of the base, and the first position of the fifth connecting rod is different from the second position of the fifth connecting rod.

In this embodiment of this application, the first connecting rod, the second connecting rod, the third connecting rod, and the base form a first four-bar linkage. The fourth connecting rod, the fifth connecting rod, the sixth connecting rod, and the base form a second four-bar linkage. The two four-bar linkages of the connecting rod assembly can deform, so that the electronic device can be unfolded or folded. The four-bar linkage is simple in structure, has a few constituent components, and low manufacturing costs. In addition, in a deformation process of the four-bar linkage, the connecting rods of the four-bar linkage restrict each other, so that the four-bar linkage has a determined motion trajectory, and a motion trajectory of the electronic device can be accurately controlled. In this embodiment of this application, the electronic device is unfolded or folded through the connecting rod assembly, so that manufacturing costs of the electronic device can be reduced while ensuring precise motion of the electronic device.

In some implementations, the first connecting rod rotates around a second rotation center relative to the second connecting rod, the second connecting rod rotates around a third rotation center relative to the third connecting rod, and a distance L1 between the second rotation center and the third rotation center meets: L1≤20 millimeters; and the fourth connecting rod rotates around a sixth rotation center relative to the fifth connecting rod, the fifth connecting rod rotates around a seventh rotation center relative to the sixth connecting rod, and a distance L2 between the sixth rotation center and the seventh rotation center meets: L2≤20 millimeters.

In this implementation, there is a large distance between the second rotation center and the third rotation center, to avoid interference between the first connecting rod and the third connecting rod in a motion process; and there may be a large spacing between the sixth rotation center and the seventh rotation center, to avoid interference between the fourth connecting rod and the sixth connecting rod in the motion process.

In some implementations, the first connecting rod rotates around a first rotation center relative to the base, the third connecting rod rotates around a fourth rotation center relative to the base, and a distance L3 between the first rotation center and the fourth rotation center meets: L3≤5 millimeters.

The fourth connecting rod rotates around a fifth rotation center relative to the base, the sixth connecting rod rotates around an eighth rotation center relative to the base, and a distance L4 between the fifth rotation center and the eighth rotation center meets: L4≤5 millimeters.

In this implementation, the distance between the first rotation center and the fourth rotation center is small, and the distance between the fifth rotation center and the eighth rotation center is small, to reduce a width of the connecting rod assembly, reduce a width of the foldable assembly, and avoid occupying large space and squeezing available space of another component in the electronic device.

In some implementations, there is a first included angle between a connection line between the first rotation center and the fourth rotation center and a first support surface of the first body part, there is a second included angle between a connection line between the fifth rotation center and the eighth rotation center and a second support surface of the second body part, and when the electronic device is unfolded, the first support surface of the first body part and the second support surface of the second body part are located on two sides of the foldable assembly.

In this implementation, if there is the first included angle between the connection line between the first rotation center and the fourth rotation center and a plane parallel to the first support surface of the first body part, the fourth rotation center is located on a side that is of the first rotation center and that is close to the screen, to reduce a distance between the fourth rotation center and the first rotation center in the first direction, thereby further reducing a width of the connecting rod assembly, and further reducing a width of the foldable assembly. In this way, more available space is reserved for another component in the electronic device. If there is the second included angle between the connection line between the fifth rotation center and the eighth rotation center and a plane parallel to the second support surface of the second body part, the eighth rotation center is located on a side that is of the fifth rotation center and that is close to the screen, to reduce a distance between the eighth rotation center and the fifth rotation center in a first direction, thereby further reducing a width of the connecting rod assembly, and further reducing a width of the foldable assembly. In this way, more available space is reserved for another component in the electronic device.

In some implementations, the first included angle meets: the first included angle≤25°, and the second included angle meets: the second included angle≤25°.

In this implementation, the first included angle and the second included angle are small, so that a thickness of the foldable assembly is small. Therefore, the electronic device is small in thickness, and can meet requirements for miniaturization, lightness, and thinness.

In some implementations, a distance L5 between the first rotation center and the second rotation center meets: L5≤4 millimeters.

A distance L6 between the fifth rotation center and the sixth rotation center meets: L6≤4 millimeters.

In this implementation, the distance between the first rotation center and the second rotation center is small, and the distance between the fifth rotation center and the sixth rotation center is small, that is, a size of the first connecting rod is small, and a size of the fifth connecting rod is small, so that the thickness of the foldable assembly is small, the thickness of the electronic device is reduced, and the requirements for miniaturization, lightness, and thinness are met.

In some implementations, in a process in which the first body part and the second body part are unfolded or folded relative to each other, the first connecting rod and the second connecting rod are capable of rotating in opposite directions relative to the base, the fourth connecting rod and the fifth connecting rod are capable of rotating in opposite directions relative to the base, the first body part is fastened to the second connecting rod, and the second body part is fastened to the fifth connecting rod.

In this implementation, each connecting rod of the connecting rod assembly can move, so that the second connecting rod and the fifth connecting rod are unfolded or folded relative to each other. Therefore, the first body part and the second body part can be unfolded or folded relative to each other through motion of each connecting rod of the connecting rod assembly, namely, deformation of the connecting rod assembly, so that the electronic device is unfolded or folded.

In some implementations, the first connecting rod rotates around the second rotation center relative to the second connecting rod, the third connecting rod rotates around the third rotation center relative to the second connecting rod, the third connecting rod rotates around the fourth rotation center relative to the base, and the third rotation center is located on a side that is of a connection line between the second rotation center and the fourth rotation center and that is away from the base.

The fourth connecting rod rotates around the sixth rotation center relative to the fifth connecting rod, the sixth connecting rod rotates around the seventh rotation center relative to the fifth connecting rod, the sixth connecting rod rotates around the eighth rotation center relative to the base, and the seventh rotation center is located on a side that is of a connection line between the sixth rotation center and the eighth rotation center and that is away from the base.

In this implementation, in the motion process of each connecting rod of the connecting rod assembly, the second connecting rod and the third connecting rod rotate in opposite directions, and the fifth connecting rod and the sixth connecting rod rotate in opposite directions. The third rotation center is located on a side that is of a connection line between the second rotation center and the fourth rotation center and that is away from the base, to avoid a case in which the second rotation center, the third rotation center, and the fourth rotation center are located on a same straight line. In this way, the second connecting rod and the third connecting rod are prevented from being blocked in a process of rotating in opposite directions. The seventh rotation center is located on a side that is of a connection line between the sixth rotation center and the eighth rotation center and that is away from the base, to avoid a case in which the sixth rotation center, the seventh rotation center, and the eighth rotation center are located on a same straight line. In this way, the fifth connecting rod and the sixth connecting rod are prevented from being blocked in a process of rotating in opposite directions.

In some implementations, the third connecting rod is provided with first avoidance space, and the first avoidance space is used to avoid the first connecting rod; and the sixth connecting rod is provided with second avoidance space, and the second avoidance space is used to avoid the fourth connecting rod.

In this implementation, the first avoidance space is used to avoid the first connecting rod in a motion process of the third connecting rod. The second avoidance space is used to avoid the fourth connecting rod in a motion process of the sixth connecting rod.

In some implementations, at least one of the base, the first connecting rod, the second connecting rod, the third connecting rod, the fourth connecting rod, the fifth connecting rod, and the sixth connecting rod includes one plate or a plurality of plates that are stacked.

In this implementation, the plate may be manufactured through forging, cutting, and other low-cost manners, so that manufacturing costs are further reduced.

In some implementations, the foldable assembly further includes a first elastic piece, a first rotatable connecting shaft, and a first fastener, where the first rotatable connecting shaft is sequentially inserted into the base, the first connecting rod, the first elastic piece, and the first fastener, the first elastic piece is capable of elastically deforming to provide a motion damping force in a process in which the first connecting rod rotates relative to the base, the first fastener is fastened to the first rotatable connecting shaft for adjusting a mounting deformation amount of the first elastic piece, and the mounting deformation amount of the first elastic piece is a deformation amount of the first elastic piece in a case in which the electronic device is unfolded.

The foldable assembly further includes a second elastic piece, a second rotatable connecting shaft, and a second fastener, where the second rotatable connecting shaft is sequentially inserted into the base, the fourth connecting rod, the second elastic piece, and the second fastener, the second elastic piece is capable of elastically deforming to provide a motion damping force in a process in which the fourth connecting rod rotates relative to the base, the second fastener is fastened to the second rotatable connecting shaft for adjusting a mounting deformation amount of the second elastic piece, and the mounting deformation amount of the second elastic piece is a deformation amount of the second elastic piece in a case in which the electronic device is unfolded.

In this implementation, the first fastener may be configured to adjust the mounting deformation amount of the first elastic piece, to adjust a magnitude of an elastic damping force that can be provided by the first elastic piece. The second fastener may be configured to adjust a mounting deformation amount of the second elastic piece, to adjust a magnitude of an elastic damping force that can be provided by the second elastic piece.

In some implementations, the foldable assembly further includes a clamping member, the clamping member is located between the first connecting rod and the first elastic piece, a clamping structure is formed between the clamping member and the first connecting rod, the first rotatable connecting shaft includes a first shaft body and a second shaft body that are connected to each other, the first shaft body is inserted into the base and the first connecting rod, the second shaft body is at least partially located in the first connecting rod, and an outer diameter of the second shaft body is less than an outer diameter of the first shaft body.

The clamping member is located between the fourth connecting rod and the second elastic piece, a clamping structure is formed between the clamping member and the fourth connecting rod, the second rotatable connecting shaft includes a third shaft body and a fourth shaft body that are connected to each other, the third shaft body is inserted into the base and the fourth connecting rod, the fourth shaft body is at least partially located in the fourth connecting rod, and an outer diameter of the fourth shaft body is less than an outer diameter of the third shaft body.

In this implementation, outer diameters of the first shaft body and the second shaft body are not equal, and a limiting boss may be formed at a joint between the first shaft body and the second shaft body. Outer diameters of the third shaft body and the fourth shaft body are not equal, and a limiting boss may be formed at a joint between the third shaft body and the fourth shaft body. In addition, the limiting bosses are disposed on the first rotatable connecting shaft and the second rotatable connecting shaft, and no other structure needs to be added to implement limiting, so that the structure is simple, and manufacturing costs are further reduced.

In some implementations, in a process in which the first body part and the second body part are unfolded or folded relative to each other, the third connecting rod and the second connecting rod are capable of rotating in a same direction relative to the base, the sixth connecting rod and the fifth connecting rod are capable of rotating in a same direction relative to the base, the first body part is fastened to the third connecting rod, and the second body part is fastened to the sixth connecting rod.

In this implementation, each connecting rod of the connecting rod assembly can move, so that the third connecting rod and the sixth connecting rod are unfolded or folded relative to each other. Therefore, the first body part and the second body part can be unfolded and folded relative to each other through motion of each connecting rod of the connecting rod assembly, namely, deformation of the connecting rod assembly, so that the electronic device is unfolded or folded.

In some implementations, the electronic device further includes a first support member and a second support member, the first support member is fastened to the second connecting rod, and the second support member is fastened to the fifth connecting rod.

When the electronic device is unfolded, the first support member and the second support member are located on two sides of the base; or when the electronic device is folded, the first support member and the second support member are located on a same side of the base and are away from each other in a direction close to the base.

In this implementation, the third connecting rod and the second connecting rod can rotate in a same direction relative to the base, and the sixth connecting rod and the fifth connecting rod can rotate in a same direction relative to the base. Therefore, the first support member and the second support member can be unfolded or folded relative to each other through motion of each connecting rod of the connecting rod assembly, namely, deformation of the connecting rod assembly. When the electronic device is unfolded, the first support member and the second support member are located on two sides of the third support member. The first support member and the second support member may be flush with each other, and form a support plane with the third support member, to provide a flat support environment for the screen. When the electronic device is folded, the first support member and the second support member are located on a same side of the third support member. The first support member, the second support member, and the third support member form screen accommodating space, and a part of the screen may be located in the screen accommodating space, to meet a folding and storage requirement of the screen, so that a risk of damage to the screen is low and reliability is high.

In some implementations, the base is provided with a first arc-shaped groove, the third connecting rod is provided with a first arc-shaped arm, the first arc-shaped arm is located at an end that is of the third connecting rod and that is rotatably connected to the base, and the first arc-shaped arm is slidably mounted on the first arc-shaped groove.

The base is provided with a second arc-shaped groove, the sixth connecting rod is provided with a second arc-shaped arm, the second arc-shaped arm is located at an end that is of the sixth connecting rod and that is rotatably connected to the base, and the second arc-shaped arm is slidably mounted on the second arc-shaped groove.

In this implementation, the arc-shaped arm of the third connecting rod is mounted on the first arc-shaped groove of the base, so that the third connecting rod rotates relative to the base. The arc-shaped arm of the sixth connecting rod is mounted on the second arc-shaped groove of the base, so that the sixth connecting rod rotates relative to the base.

In some implementations, the foldable assembly further includes a first elastic piece, a first connecting shaft, and a first fastener, where the first connecting shaft is sequentially connected to the first connecting rod, the first elastic piece, and the first fastener, the first elastic piece is capable of elastically deforming to provide a motion damping force in a process in which the first connecting rod rotates relative to the base, the first fastener is fastened to the first connecting shaft for adjusting a mounting deformation amount of the first elastic piece, and the mounting deformation amount of the first elastic piece is a deformation amount of the first elastic piece in a case in which the electronic device is unfolded.

The foldable assembly further includes a second elastic piece, a second connecting shaft, and a second fastener, where the second connecting shaft is sequentially connected to the fourth connecting rod, the second elastic piece, and the second fastener, the second elastic piece is capable of elastically deforming to provide a motion damping force in a process in which the fourth connecting rod rotates relative to the base, the second fastener is fastened to the second rotatable connecting shaft for adjusting a mounting deformation amount of the second elastic piece, and the mounting deformation amount of the second elastic piece is a deformation amount of the second elastic piece in a case in which the electronic device is unfolded.

In this implementation, the first fastener may be configured to adjust the mounting deformation amount of the first elastic piece, to adjust a magnitude of an elastic damping force that can be provided by the first elastic piece. The second fastener may be configured to adjust a mounting deformation amount of the second elastic piece, to adjust a magnitude of an elastic damping force that can be provided by the second elastic piece.

According to a second aspect, an embodiment of this application further provides a foldable assembly. The foldable assembly provided in this embodiment of this application is used in a foldable electronic device. The electronic device includes a first body part and a second body part, the foldable assembly is connected between the first body part and the second body part, and the first body part and the second body part are capable of being unfolded or folded relative to each other via the foldable assembly, so that the electronic device is unfolded or folded.

The foldable assembly includes a first connecting rod, a second connecting rod, a third connecting rod, and a base, where the first connecting rod, the second connecting rod, and the third connecting rod are connected between the base and the first body part, one end of the first connecting rod is rotatably connected to a first position of the base, the other end of the first connecting rod is rotatably connected to a first position of the second connecting rod, one end of the third connecting rod is rotatably connected to a second position of the base, the other end of the third connecting rod is rotatably connected to a second position of the second connecting rod, the first position of the base is different from the second position of the base, and the first position of the second connecting rod is different from the second position of the second connecting rod.

The foldable assembly further includes a fourth connecting rod, a fifth connecting rod, and a sixth connecting rod, where the fourth connecting rod, the fifth connecting rod, and the sixth connecting rod are connected between the base and the second body part, one end of the fourth connecting rod is rotatably connected to a third position of the base, the other end of the fourth connecting rod is rotatably connected to a first position of the fifth connecting rod, one end of the sixth connecting rod is rotatably connected to a fourth position of the base, the other end of the sixth connecting rod is rotatably connected to a second position of the fifth connecting rod, the third position of the base is different from the fourth position of the base, and the first position of the fifth connecting rod is different from the second position of the fifth connecting rod.

In this embodiment of this application, the first connecting rod, the second connecting rod, the third connecting rod, and the base form a first four-bar linkage. The fourth connecting rod, the fifth connecting rod, the sixth connecting rod, and the base form a second four-bar linkage. The two four-bar linkages of the connecting rod assembly can deform, so that the electronic device can be unfolded or folded. The four-bar linkage is simple in structure, has a few constituent components, and low manufacturing costs. In addition, in a deformation process of the four-bar linkage, the connecting rods of the four-bar linkage restrict each other, so that the four-bar linkage has a determined motion trajectory, and a motion trajectory of the electronic device can be accurately controlled. In this embodiment of this application, the electronic device is unfolded or folded through the connecting rod assembly, so that manufacturing costs of the electronic device can be reduced while ensuring precise motion of the electronic device.

In some implementations, the first connecting rod rotates around a second rotation center relative to the second connecting rod, the second connecting rod rotates around a third rotation center relative to the third connecting rod, and a distance L1 between the second rotation center and the third rotation center meets: L1≤20 millimeters; and the fourth connecting rod rotates around a sixth rotation center relative to the fifth connecting rod, the fifth connecting rod rotates around a seventh rotation center relative to the sixth connecting rod, and a distance L2 between the sixth rotation center and the seventh rotation center meets: L2≤20 millimeters.

In this implementation, there is a large distance between the second rotation center and the third rotation center, to avoid interference between the first connecting rod and the third connecting rod in a motion process; and there may be a large spacing between the sixth rotation center and the seventh rotation center, to avoid interference between the fourth connecting rod and the sixth connecting rod in the motion process.

In some implementations, the first connecting rod rotates around a first rotation center relative to the base, the third connecting rod rotates around a fourth rotation center relative to the base, and a distance L3 between the first rotation center and the fourth rotation center meets: L3≤5 millimeters.

The fourth connecting rod rotates around a fifth rotation center relative to the base, the sixth connecting rod rotates around an eighth rotation center relative to the base, and a distance L4 between the fifth rotation center and the eighth rotation center meets: L4≤5 millimeters.

In this implementation, the distance between the first rotation center and the fourth rotation center is small, and the distance between the fifth rotation center and the eighth rotation center is small, to reduce a width of the connecting rod assembly, reduce a width of the foldable assembly, and avoid occupying large space and squeezing available space of another component in the electronic device.

In some implementations, a distance L5 between the first rotation center and the second rotation center meets: L5≤4 millimeters.

A distance L6 between the fifth rotation center and the sixth rotation center meets: L6≤4 millimeters.

In this implementation, the distance between the first rotation center and the second rotation center is small, and the distance between the fifth rotation center and the sixth rotation center is small, that is, a size of the first connecting rod is small, and a size of the fifth connecting rod is small, so that the thickness of the foldable assembly is small, the thickness of the electronic device is reduced, and the requirements for miniaturization, lightness, and thinness are met.

In some implementations, in a process in which the first body part and the second body part are unfolded or folded relative to each other, the first connecting rod and the second connecting rod are capable of rotating in opposite directions relative to the base, the fourth connecting rod and the fifth connecting rod are capable of rotating in opposite directions relative to the base, the first body part is fastened to the second connecting rod, and the second body part is fastened to the fifth connecting rod.

In this implementation, each connecting rod of the connecting rod assembly can move, so that the second connecting rod and the fifth connecting rod are unfolded or folded relative to each other. Therefore, the first body part and the second body part can be unfolded or folded relative to each other through motion of each connecting rod of the connecting rod assembly, namely, deformation of the connecting rod assembly, so that the electronic device is unfolded or folded.

In some implementations, in a process in which the first body part and the second body part are unfolded or folded relative to each other, the third connecting rod and the second connecting rod are capable of rotating in a same direction relative to the base, the sixth connecting rod and the fifth connecting rod are capable of rotating in a same direction relative to the base, the first body part is fastened to the third connecting rod, and the second body part is fastened to the sixth connecting rod.

In this implementation, each connecting rod of the connecting rod assembly can move, so that the third connecting rod and the sixth connecting rod are unfolded or folded relative to each other. Therefore, the first body part and the second body part can be unfolded or folded relative to each other through motion of each connecting rod of the connecting rod assembly, namely, deformation of the connecting rod assembly, so that the electronic device is unfolded or folded.

### BRIEF DESCRIPTION OF DRAWINGS

FIG. 1 is a diagram of a structure of an electronic device that is unfolded according to an embodiment of this application;
FIG. 2 is a diagram of a structure of the electronic device in FIG. 1 that is folded;
FIG. 3 is a diagram of a partial exploded structure of the electronic device shown in FIG. 1;
FIG. 4 is a diagram of a structure of a foldable assembly shown in FIG. 2 that is unfolded;
FIG. 5 is a diagram of a structure of the foldable assembly shown in FIG. 4 that is folded;
FIG. 6 is a diagram of a partial exploded structure of the foldable assembly shown in FIG. 4;
FIG. 7 is a diagram of an exploded structure of a connecting rod assembly shown in FIG. 6;
FIG. 8 is a diagram of a structure in a case in which a partial structure of the connecting rod assembly shown in FIG. 7 is in an assembled state;
FIG. 9 is a diagram of a structure of a connecting rod assembly shown in FIG. 6;
FIG. 10 is a diagram of projection of the connecting rod assembly shown in FIG. 9;
FIG. 11 is a diagram of projection of the connecting rod assembly shown in FIG. 9 that is folded;
FIG. 12 is a diagram of a motion process of the connecting rod assembly shown in FIG. 10 in some embodiments;
FIG. 13 is a diagram of a position relationship between connecting rods of the connecting rod assembly shown in FIG. 10;
FIG. 14 is a schematic exploded view of a partial structure of a first connecting assembly shown in FIG. 6;
FIG. 15 is a diagram of a structure of a clamping member in FIG. 14 from another prospective;
FIG. 16 is a diagram of a structure of a first connecting assembly shown in FIG. 6;
FIG. 17 is a diagram of an internal structure of the first connecting assembly shown in FIG. 16;
FIG. 18 is a diagram of a partial internal structure of the electronic device in FIG. 2 that is folded;
FIG. 19 is a diagram of a structure of a foldable assembly shown in FIG. 3 in some other embodiments;
FIG. 20 is a diagram of a structure of the foldable assembly shown in FIG. 19 that is folded;
FIG. 21 is a schematic exploded view of a partial structure of the foldable assembly shown in FIG. 19;
FIG. 22 is a schematic exploded view of a partial structure of a first connecting assembly shown in FIG. 21;
FIG. 23 is a diagram of a partial exploded structure of the first connecting assembly shown in FIG. 22 from another perspective;
FIG. 24 is a diagram of a structure of the first connecting assembly shown in FIG. 22;
FIG. 25 is a diagram of the structure of the first connecting assembly shown in FIG. 24 from another perspective;
FIG. 26 is a diagram of the partial structure of the foldable assembly shown in FIG. 21 from another perspective;
FIG. 27 is a diagram of the structure of the foldable assembly shown in FIG. 19 from another perspective;
FIG. 28A is a diagram of an internal structure of the foldable assembly that is shown in FIG. 19 and that is cut along A-A;
FIG. 28B is a diagram of a partial internal structure of the foldable assembly shown in FIG. 19;
FIG. 29 is a diagram of an internal structure of the foldable assembly that is shown in FIG. 19 and that is cut along B-B;
FIG. 30 is a diagram of an internal structure of the foldable assembly that is shown in FIG. 19 and that is cut along C-C;
FIG. 31 is a diagram of an internal structure of the foldable assembly that is shown in FIG. 19 and that is cut along D-D;
FIG. 32 is a diagram of an internal structure of the foldable assembly shown in FIG. 30 that is folded;
FIG. 33 is a diagram of a motion process of the connecting rod assembly shown in FIG. 27 in some embodiments;
FIG. 34 is a diagram of a position relationship between connecting rods of the connecting rod assembly shown in FIG. 27; and
FIG. 35 is a diagram of an internal structure of the electronic device shown in FIG. 2 that is folded in some other embodiments.

### DESCRIPTION OF EMBODIMENTS

The following describes embodiments of this application with reference to the accompanying drawings in embodiments of this application. In the descriptions of embodiments of this application, unless otherwise specified, "a plurality of" means two or more. In addition, a "connection" in this specification should be understood in a broad sense. For example, the "connection" may be a detachable connection, a non-removable connection, a direct connection, or an indirect connection through an intermediate medium. In addition, "being fastened" in this specification should also be understood in a broad sense. For example, "being fastened" may indicate being directly fastened, or may indicate being indirectly fastened through an intermediate medium.

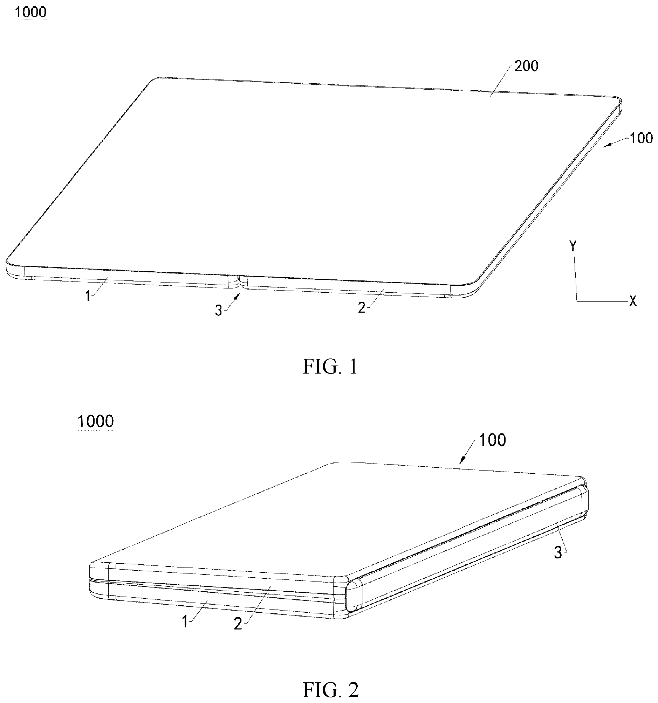

Refer to FIG. 1 and FIG. 2. FIG. 1 is a diagram of a structure of an electronic device 1000 that is unfolded according to an embodiment of this application. FIG. 2 is a diagram of a structure of the electronic device 1000 shown in FIG. 1 that is folded.

In some embodiments, the electronic device 1000 may include a body 100 and a screen 200, and the screen 200 is mounted on the body 100. The body 100 may be unfolded or folded via a structure like a rotating shaft, or may be unfolded or folded through deformation of the screen 200. The screen 200 moves with the body 100, and the body 100 may drive the screen 200 to unfold or fold. When the electronic device 1000 is folded, the screen 200 is located inside the body 100. In some other embodiments, the electronic device 1000 may further include an external screen (not shown in the figure). The external screen is mounted on the body 100, and is located, away from the screen 200, on two sides of the body 100. When the electronic device 1000 is folded, the external screen may be located outside the body 100.

In this embodiment, when the electronic device 1000 is unfolded, the screen 200 can be displayed in full screen, so that the electronic device 1000 has a large display area, thereby improving viewing experience and operation experience of a user. When the electronic device 1000 is folded, a planar size of the electronic device 1000 is small, so the user can conveniently carry and place the electronic device 1000.

In some embodiments, the screen 200 may be integrated with a display function and a touch sensing function. The display function of the screen 200 is used to display an image, a video, and the like, and the touch sensing function of the screen 200 is used to sense a touch action of the user, so as to implement human-machine interaction. For example, the screen 200 may be a flexible display that can be bent. The flexible display may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a mini-LED display, a micro-LED display, a micro-OLED display, a quantum dot light-emitting diode (quantum dot light-emitting diode, QLED) display, or the like.

For example, the screen 200 may be fastened to the body 100. For example, the screen 200 may be fastened to the body 100 through bonding, welding, riveting, or the like. In some other embodiments, the screen 200 may alternatively be movably mounted on the body 100. For example, the screen 200 may slide relative to the body 100.

In some embodiments, the electronic device 1000 may further include a plurality of components (not shown in the figure), and the plurality of components are mounted inside or on a surface of the body 100. The plurality of components may include, for example, a processor, an internal memory, an external memory interface, a universal serial bus (universal serial bus, USB) interface, a charging management module, a power management module, a battery, an antenna, a communication module, a camera, an audio module, a speaker, a receiver, a microphone, a headset interface, a sensor module, a button, a motor, an indicator, a subscriber identification module (subscriber identification module, SIM) card interface, and the like. It may be understood that the electronic device 1000 may have more or fewer components than those described above, or combine two or more components, or have different component configurations. Various components may be implemented in hardware, software, or a combination of hardware and software including one or more signal processing and/or application-specific integrated circuits.

It should be understood that, in this embodiment, the electronic device 1000 includes two plate parts and a bent part connected between the two plate parts. The two plate parts may rotate toward each other to be stacked on each other, so that the electronic device 1000 is in a form of two layers. The two plate parts may alternatively rotate away from each other. In some other embodiments, the electronic device 1000 may alternatively be of a structure of more than three folds, or the like. That is, the electronic device 1000 includes more than three plate parts, two adjacent plate parts are connected through a bent part, and the two adjacent plate parts may rotate toward each other to be stacked on each other or rotate away from each other. When the electronic device 1000 includes more than three plate parts, for a structure of the electronic device 1000, refer to descriptions in this embodiment for adaptive design. Details are not described in this application again.

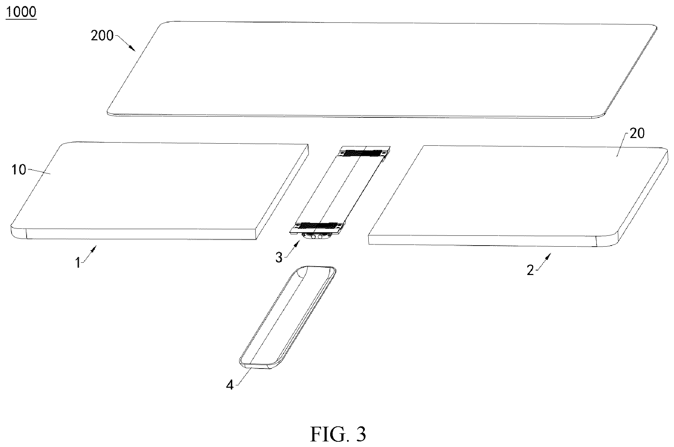

Refer to FIG. 1, FIG. 2, and FIG. 3. FIG. 3 is a diagram of a partial exploded structure of the electronic device 1000 shown in FIG. 1.

In some embodiments, the body 100 may include a first body part 1, a second body part 2, and a foldable assembly 3.

The foldable assembly 3 may be connected between the first body part 1 and the second body part 2, and the first body part 1 and the second body part 2 may be unfolded or folded relative to each other through the foldable assembly 3, so that the electronic device 1000 is unfolded or folded.

In this embodiment of this application, the foldable assembly 3 is connected to the first body part 1 and the second body part 2. Based on a structural design of the foldable assembly 3, the first body part 1 and the second body part 2 can be located on two sides of the foldable assembly 3 when the electronic device 1000 is unfolded and can provide a flat support environment for the screen 200 with the foldable assembly 3, and can be further located on a same side of the foldable assembly 3 when the electronic device 1000 is folded and can provide good screen accommodating space for the screen 200 with the foldable assembly 3. In this way, the screen 200 of the electronic device 1000 can meet both a large-screen display requirement and a folding and storage requirement, and the screen 200 has a low risk of being damaged and high reliability.

When the electronic device 1000 is unfolded, an included angle between the first body part 1 and the second body part 2 may be approximately 180°. In some other embodiments, when the electronic device 1000 is unfolded, an angle between the first body part 1 and the second body part 2 may alternatively have a slight deviation relative to 180°, for example, 165°, 177°, or 185°. The included angle between the first body part 1 and the second body part 2 is defined as an included angle between an upper side of the first body part 1 and an upper side of the second body part 2.

When the electronic device 1000 is folded, the included angle between the first body part 1 and the second body part 2 may be approximately 0°, and the first body part 1 and the second body part 2 are folded. In some other embodiments, when the first body part 1 and the second body part 2 are folded, the first body part 1 and the second body part 2 may alternatively approach each other, and there is a small gap between the first body part 1 and the second body part 2. This is not strictly limited in this application.

In addition, the electronic device 1000 may alternatively stay in a process from being unfolded to being folded, or from being folded to being unfolded. For example, when the electronic device 1000 stays, the angle between the first body part 1 and the second body part 2 is less than 180°, for example, 45°, 90°, or 120°.

The foldable assembly 3 may include a base 4. The base 4 is located on a side that is of the foldable assembly 3 and that is away from the screen 200. The foldable assembly 3 is mounted on the base 4. For example, mounting structures (not shown in the figure) such as a plurality of protrusions and grooves may be provided on a side that is of the base 4 and that faces the screen 200, and are configured to cooperate with the foldable assembly 3, so that the foldable assembly 3 is mounted on the base 4.

For example, a first support surface 10 may be provided on the first body part 1, and the first support surface 10 of the first body part 1 is a surface that is of the first body part 1 and that faces the screen 200. A second support surface 20 may be provided on the second body part 2, and the second support surface 20 of the second body part 2 is a surface that is of the second body part 2 and that faces the screen 200. When the electronic device 1000 is unfolded, the first support surface 10 of the first body part 1 and the second support surface 20 of the second body part 2 may be parallel to the screen 200, to provide a flat support environment for the screen 200.

The following describes an implementation structure of the foldable assembly 3 by using an example.

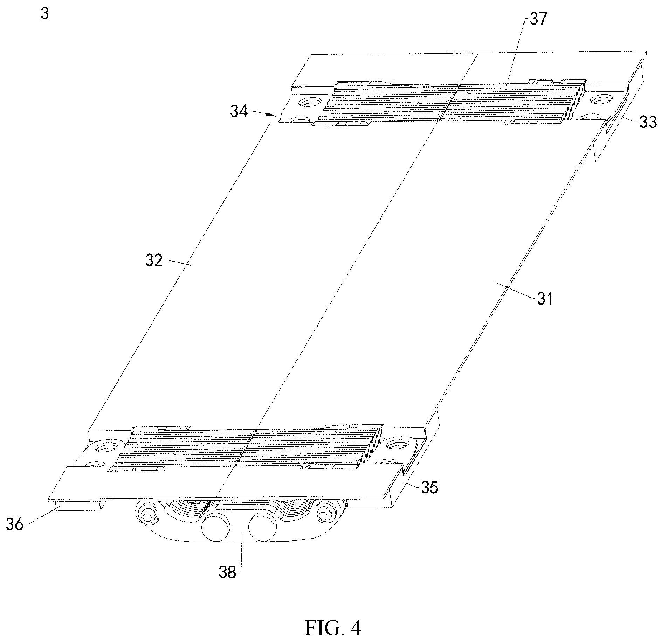

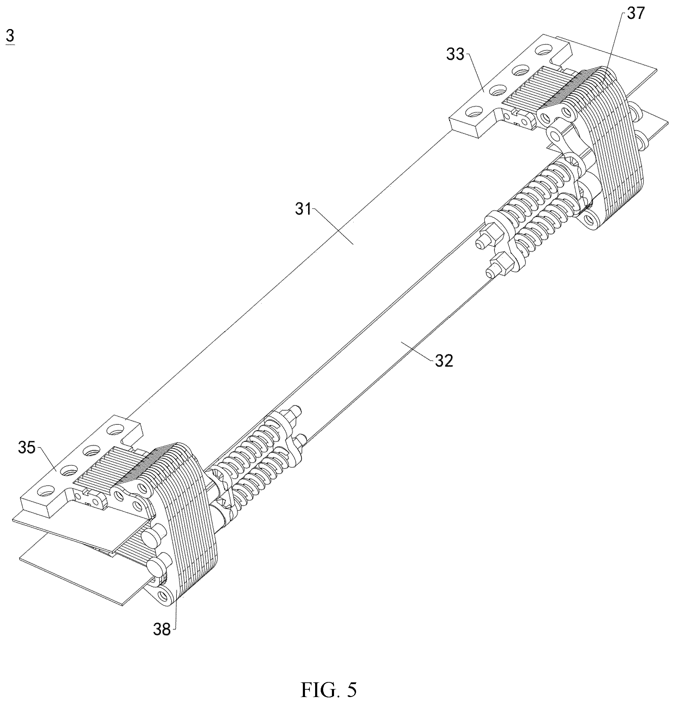

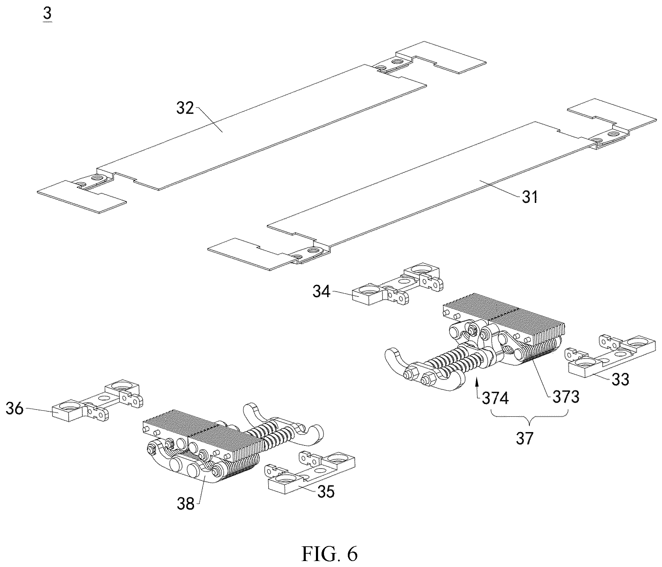

Refer to FIG. 4, FIG. 5, and FIG. 6. FIG. 4 is a diagram of a structure of the foldable assembly 3 shown in FIG. 2 that is unfolded. FIG. 5 is a diagram of a structure of the foldable assembly 3 shown in FIG. 4 that is folded. FIG. 6 is a diagram of a partial exploded structure of the foldable assembly 3 shown in FIG. 4.

For example, the foldable assembly 3 includes a first support member 31, a second support member 32, a first fastening member 33, a second fastening member 34, a third fastening member 35, a fourth fastening member 36, a first connecting assembly 37, and a second connecting assembly 38. The first connecting assembly 37 and the second connecting assembly 38 jointly form a main motion mechanism of the foldable assembly 3. The first connecting assembly 37 and the second connecting assembly 38 are spaced from each other in an axial direction. In this application, the axial direction is an extension direction of the base 4.

The first support member 31 and the second support member 32 are connected to two sides of the first connecting assembly 37 and the second connecting assembly 38, and the first connecting assembly 37 and the second connecting assembly 38 can deform, so that the first support member 31 and the second support member 32 are unfolded or folded relative to each other. In this embodiment of this application, a change in a shape of a structure may be considered as "deformation".

The first fastening member 33 and the second fastening member 34 are respectively located on two sides of the first connecting assembly 37, one side of the first connecting assembly 37 is fastened to the first support member 31 through the first fastening member 33, and the other side of the first connecting assembly 37 is fastened to the second support member 32 through the second fastening member 34. The third fastening member 35 and the fourth fastening member 36 are respectively located on two sides of the second connecting assembly 38, one side of the second connecting assembly 38 is fastened to the first support member 31 through the third fastening member 35, and the other side of the second connecting assembly 38 is fastened to the second support member 32 through the fourth fastening member 36.

In this embodiment of this application, the foldable assembly 3 includes two connecting assemblies (37 and 38). In some other embodiments, the foldable assembly 3 may further include another quantity of connecting assemblies, for example, one connecting assembly, three connecting assemblies, or four connecting assemblies. The plurality of connecting assemblies may be of a same structure, or a structure of at least one connecting assembly may be different from a structure of another connecting assembly. This is not limited in this application.

In this embodiment of this application, the foldable assembly 3 includes the first connecting assembly 37 and the second connecting assembly 38. For the second connecting assembly 38 in this application, refer to a design of the first connecting assembly 37. Details are not described in this application again. In this embodiment of this application, when a component is designed with reference to another component, structures of the two components may be completely the same, or core structures of the two components may be the same, but a few structures may be different. This is not strictly limited in this application.

In addition, the second connecting assembly 38 and the first connecting assembly 37 include a same component, and an arrangement position of each component of the second connecting assembly 38 is symmetrical to an arrangement position of each component of the first connecting assembly 37. For a connection relationship between the second connecting assembly 38 and both the third fastening member 35 and the fourth fastening member 36, refer to the connection relationship between the first connecting assembly 37 and both the first fastening member 33 and the second fastening member 34. Details are not described herein again. The following describes an implementation structure of the first connecting assembly 37 by using an example with reference to the accompanying drawings.

In some embodiments, the first connecting assembly 37 may include a connecting rod assembly 373 and a damping assembly 374. The connecting rod assembly 373 can deform, so that the first connecting assembly 37 deforms. The damping assembly 374 is connected to the connecting rod assembly 373, and is configured to provide a motion damping force for motion between connecting rods of the connecting rod assembly 373.

For example, upper surfaces of the first support member 31 and the second support member 32 are flat surfaces, so that a flat support environment can be provided for the screen 200. In some embodiments, the first support member 31 and/or the second support member 32 may be of a plate-like structure. In some other embodiments, the first support member 31 and the second support member 32 may alternatively be of another structure. This is not limited in this application.

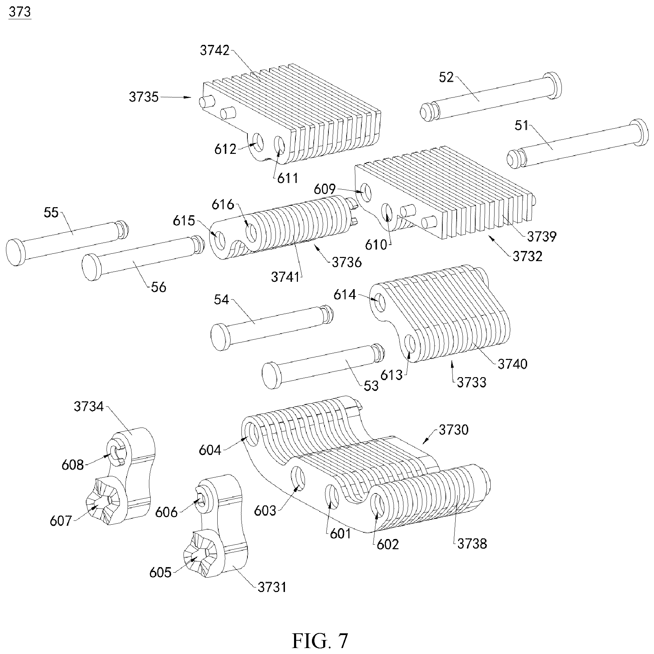

FIG. 7 is a diagram of an exploded structure of the connecting rod assembly 373 shown in FIG. 6.

For example, the connecting rod assembly 373 may include a base 3730, a first connecting rod 3731, a second connecting rod 3732, a third connecting rod 3733, a fourth connecting rod 3734, a fifth connecting rod 3735, a sixth connecting rod 3736, and a plurality of pin shafts. For example, the plurality of pin shafts may include a first pin shaft 51, a second pin shaft 52, a third pin shaft 53, a fourth pin shaft 54, a fifth pin shaft 55, and a sixth pin shaft 56.

For example, the base 3730 may be of a structure in which two ends are tilted and a middle part is concave. The base 3730 may have a plurality of connection holes, and the plurality of connection holes may be distributed at the two ends and the middle part of the base 3730. The plurality of connection holes may include a first connection hole 601, a second connection hole 602, a third connection hole 603, and a fourth connection hole 604. The second connection hole 602 and the fourth connection hole 604 are respectively located at the two ends of the base 3730. The first connection hole 601 and the third connection hole 603 are located between the second connection hole 602 and the fourth connection hole 604.

The first connecting rod 3731 may have a fifth connection hole 605 and a sixth connection hole 606, and the fifth connection hole 605 and the sixth connection hole 606 are respectively located at two ends of the first connecting rod 3731. The fourth connecting rod 3734 may have a seventh connection hole 607 and an eighth connection hole 608, and the seventh connection hole 607 and the eighth connection hole 608 are respectively located at two ends of the fourth connecting rod 3734.

The second connecting rod 3732 may have a ninth connection hole 609 and a tenth connection hole 610 that are spaced from each other, and the fifth connecting rod 3735 may have an eleventh connection hole 611 and a twelfth connection hole 612 that are spaced from each other.

The first connection hole 601 of the base 3730 is located in a first position of the base 3730, and the second connection hole 602 of the base 3730 is located in a second position of the base 3730. The first position of the base 3730 is different from the second position of the base 3730, that is, there is a spacing between the first position of the base 3730 and the second position of the base 3730. The ninth connection hole 609 of the second connecting rod 3732 is located in a first position of the second connecting rod 3732, and the tenth connection hole 610 of the second connecting rod 3732 is located in a second position of the second connecting rod 3732. The first position of the second connecting rod 3732 is different from the second position of the second connecting rod 3732. That is, there is a spacing between the first position of the second connecting rod 3732 and the second position of the second connecting rod 3732.

The third connection hole 603 of the base 3730 is located in a third position of the base 3730, and the fourth connection hole 604 of the base 3730 is located in a fourth position of the base 3730. The third position of the base 3730 is different from the fourth position of the base 3730, that is, there is a spacing between the third position of the base 3730 and the fourth position of the base 3730. The eleventh connection hole 611 of the fifth connecting rod 3735 is located in a third position of the fifth connecting rod 3735, and the twelfth connection hole 612 of the fifth connecting rod 3735 is located in a fourth position of the fifth connecting rod 3735. The third position of the fifth connecting rod 3735 is different from the fourth position of the fifth connecting rod 3735, that is, there is a spacing between the third position of the fifth connecting rod 3735 and the fourth position of the fifth connecting rod 3735.

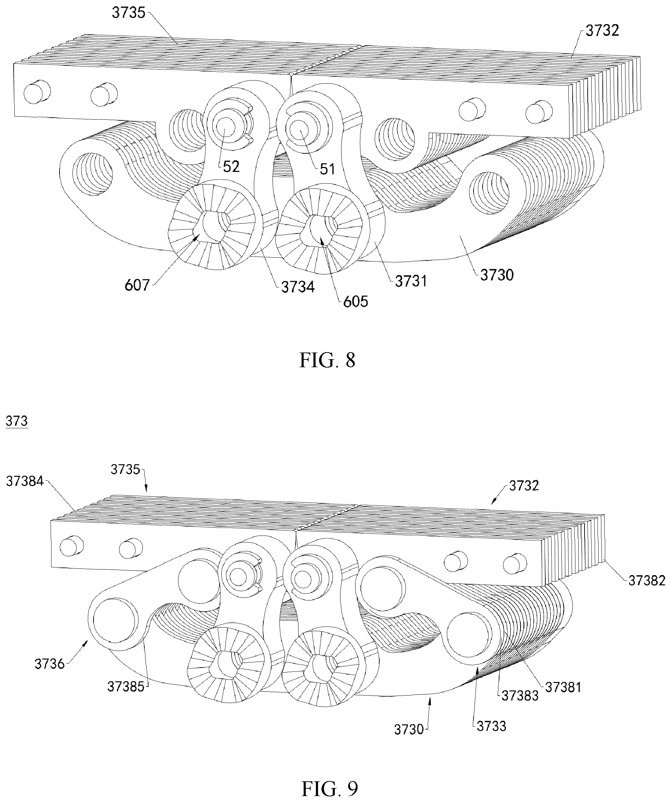

Refer to FIG. 7 and FIG. 8. FIG. 8 is a diagram of a structure in a case in which a partial structure of the connecting rod assembly 373 shown in FIG. 7 is in an assembled state. FIG. 8 shows a structure in a case in which the base 3730, the first connecting rod 3731, the second connecting rod 3732, the fourth connecting rod 3734, and the fifth connecting rod 3735 are in an assembled state.

One end of the first connecting rod 3731 is rotatably connected to the base 3730, and the other end of the first connecting rod 3731 is rotatably connected to the second connecting rod 3732. The fifth connection hole 605 of the first connecting rod 3731 may be connected to the first connection hole 601 of the base 3730 through a structure like a rotatable connecting shaft, so that one end of the first connecting rod 3731 is rotatably connected to the base 3730. The sixth connection hole 606 of the first connecting rod 3731 may be connected to the ninth connection hole 609 of the second connecting rod 3732 through the first pin shaft 51, so that the other end of the first connecting rod 3731 is rotatably connected to the second connecting rod 3732.

One end of the fourth connecting rod 3734 is rotatably connected to the base 3730, and the other end of the fourth connecting rod 3734 is rotatably connected to the fifth connecting rod 3735. The seventh connection hole 607 of the fourth connecting rod 3734 may be connected to the third connection hole 603 of the base 3730 through a structure like a rotatable connecting shaft, so that one end of the fourth connecting rod 3734 is rotatably connected to the base 3730. The eighth connection hole 608 of the fourth connecting rod 3734 may be connected to the eleventh connection hole 611 of the fifth connecting rod 3735 through the second pin shaft 52, so that the other end of the fourth connecting rod 3734 is rotatably connected to the fifth connecting rod 3735.

Refer to FIG. 7 and FIG. 9. FIG. 9 is a diagram of a structure of the connecting rod assembly 373 shown in FIG. 6. FIG. 9 shows a structure in a case in which the base 3730, the first connecting rod 3731, the second connecting rod 3732, the third connecting rod 3733, the fourth connecting rod 3734, the fifth connecting rod 3735, and the sixth connecting rod 3736 are in an assembled state.

As shown in FIG. 7, the third connecting rod 3733 may have a thirteenth connection hole 613 and a fourteenth connection hole 614, and the thirteenth connection hole 613 and the fourteenth connection hole 614 are respectively located at two ends of the third connecting rod 3733. The sixth connecting rod 3736 may have a fifteenth connection hole 615 and a sixteenth connection hole 616, and the fifteenth connection hole 615 and the sixteenth connection hole 616 are respectively located at two ends of the sixth connecting rod 3736.

As shown in FIG. 9, one end of the third connecting rod 3733 is rotatably connected to the base 3730, and the other end of the third connecting rod 3733 is rotatably connected to the second connecting rod 3732. The thirteenth connection hole 613 of the third connecting rod 3733 may be connected to the second connection hole 602 of the base 3730 through a structure like the third pin shaft 53, so that one end of the third connecting rod 3733 is rotatably connected to the base 3730. The fourteenth connection hole 614 of the third connecting rod 3733 may be connected to the tenth connection hole 610 of the second connecting rod 3732 through the fourth pin shaft 54, so that the other end of the third connecting rod 3733 is rotatably connected to the second connecting rod 3732.

One end of the sixth connecting rod 3736 is rotatably connected to the base 3730, and the other end of the sixth connecting rod 3736 is rotatably connected to the fifth connecting rod 3735. The fifteenth connection hole 615 of the sixth connecting rod 3736 may be connected to the fourth connection hole 604 of the base 3730 through a structure like the fifth pin shaft 55, so that one end of the sixth connecting rod 3736 is rotatably connected to the base 3730. The sixteenth connection hole 616 of the sixth connecting rod 3736 may be connected to the twelfth connection hole 612 of the fifth connecting rod 3735 through the sixth pin shaft 56, so that the other end of the sixth connecting rod 3736 is rotatably connected to the fifth connecting rod 3735.

For example, at least one of the base 3730, the second connecting rod 3732, the third connecting rod 3733, the fourth connecting rod 3734, the fifth connecting rod 3735, and the sixth connecting rod 3736 may include one plate or a plurality of plates that are stacked. The plate may be manufactured through forging, cutting, and other low-cost manners, so that manufacturing costs are further reduced. In this embodiment, as shown in FIG. 7, an example in which the base 3730, the second connecting rod 3732, the third connecting rod 3733, the fourth connecting rod 3734, the fifth connecting rod 3735, and the sixth connecting rod 3736 each use a plurality of plates that are stacked is used for description.

**In** some embodiments, the base 3730 may include a plurality of first spacers 37381 that are stacked, and the plurality of first spacers 37381 are evenly spaced from each other. The second connecting rod 3732 may include a plurality of second spacers 37382 that are stacked, and the plurality of second spacers 37382 are evenly spaced from each other. The third connecting rod 3733 may include a plurality of third spacers 37383 that are stacked, and the plurality of third spacers 37383 are evenly spaced from each other. A quantity of first spacers 37381, a quantity of second spacers 37382, and a quantity of third spacers 37383 may be equal. A thickness of the first spacer 37381, a thickness of the second spacer 37382, and a thickness of the third spacer 37383 are even.

The fifth connecting rod 3735 may include a plurality of fourth spacers 37384 that are stacked, and the plurality of fourth spacers 37384 are evenly spaced from each other. The sixth connecting rod 3736 may include a plurality of fifth spacers 37385 that are stacked, and the plurality of fifth spacers 37385 are evenly spaced from each other. A quantity of first spacers 37381, a quantity of fourth spacers 37384, and a quantity of fifth spacers 37385 may be equal. A thickness of the first spacer 37381, a thickness of the fourth spacer 37384, and a thickness of the fifth spacer 37385 are even.

As shown in FIG. 9, in this embodiment, ends of the plurality of third spacers 37383 of the third connecting rod 3733 and the plurality of first spacers 37381 of the base 3730 may be staggered, and the other ends of the plurality of third spacers 37383 of the third connecting rod 3733 and the plurality of second spacers 37382 of the second connecting rod 3732 may be staggered. The plurality of third spacers 37383 and the plurality of first spacers 37381 are staggered, so that the third spacer 37383 and the first spacer 37381 can support each other, and both the third spacer 37383 and the first spacer 37381 can be evenly spaced from each other. The plurality of third spacers 37383 and the plurality of second spacers 37382 are staggered, so that the third spacer 37383 and the second spacer 37382 can support each other, and both the third spacer 37383 and the second spacer 37382 can be evenly spaced from each other.

Ends of the plurality of fifth spacers 37385 of the sixth connecting rod 3736 and the plurality of first spacers 37381 of the base 3730 may be staggered, and the other ends of the plurality of fifth spacers 37385 of the sixth connecting rod 3736 and the plurality of fourth spacers 37384 of the fifth connecting rod 3735 may be staggered. The plurality of fifth spacers 37385 and the plurality of first spacers 37381 are staggered, so that the fifth spacer 37385 and the first spacer 37381 can support each other, and both the fifth spacer 37385 and the first spacer 37381 can be evenly spaced from each other. The plurality of fifth spacers 37385 and the plurality of fourth spacers 37384 are staggered, so that the fifth spacer 37385 and the fourth spacer 37384 can support each other, and both the fifth spacer 37385 and the fourth spacer 37384 can be evenly spaced from each other.

In addition, in this embodiment, structural strength of the base 3730, the second connecting rod 3732, and the third connecting rod 3733 may be adjusted by changing the quantity of first spacers 37381, second spacers 37382, and third spacers 37383, so that structural strength of the connecting rod assembly 373 is adjusted. Structural strength of the base 3730, the fifth connecting rod 3735, and the sixth connecting rod 3736 may be adjusted by changing the quantity of first spacers 37381, fourth spacers 37384, and fifth spacers 37385, so that structural strength of the connecting rod assembly 373 is adjusted. A user can select different quantities of spacers based on structural strength, costs, and other factors. The connecting rod assembly 373 provided in this application is easy to design, and has flexible configuration, and can be applied to a plurality of application scenarios.

At least one of the base 3730, the second connecting rod 3732, the third connecting rod 3733, the fourth connecting rod 3734, the fifth connecting rod 3735, and the sixth connecting rod 3736 may alternatively be an integrally formed mechanical part, to have high structural strength. For example, at least one of the base 3730, the second connecting rod 3732, and the third connecting rod 3733 may be formed by using a computer numerical control (computer numerical control, CNC) milling process. In some other embodiments, the second connection arm 244 may alternatively be formed by using a metal injection molding process. This is not strictly limited in embodiments of this application.

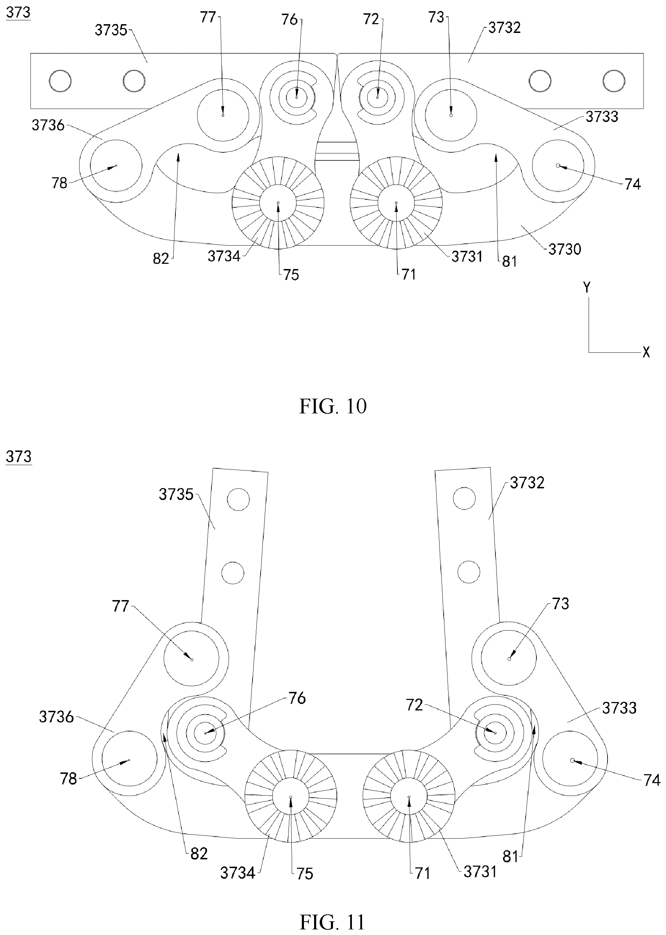

Refer to FIG. 10 and FIG. 11. FIG. 10 is a diagram of projection of the connecting rod assembly 373 shown in FIG. 9. FIG. 11 is a diagram of projection of the connecting rod assembly 373 shown in FIG. 9 that is folded. A projection direction of the connecting rod assembly 373 in FIG. 10 and FIG. 11 is parallel to an axial direction.

The first connecting rod 3731 rotates around a first rotation center 71 relative to the base 3730, the first connecting rod 3731 rotates around a second rotation center 72 relative to the second connecting rod 3732, the second connecting rod 3732 rotates around a third rotation center 73 relative to the third connecting rod 3733, and the third connecting rod 3733 rotates around a fourth rotation center 74 relative to the base 3730.

In addition, the first connection hole 601 of the base 3730 is located in the first position of the base 3730 (refer to FIG. 7), and therefore the first rotation center 71 is located in the first position of the base 3730; and the second connection hole 602 of the base 3730 is located in the second position of the base 3730 (refer to FIG. 7), and therefore the fourth rotation center 74 is located in the second position of the base 3730. If there is a spacing between the first position of the base 3730 and the second position of the base 3730 (refer to FIG. 7), there is a spacing between the first rotation center 71 and the fourth rotation center 74.

In addition, the ninth connection hole 609 of the second connecting rod 3732 is located in the first position of the second connecting rod 3732 (refer to FIG. 7), and therefore the second rotation center 72 is located in the first position of the second connecting rod 3732; and the tenth connection hole 610 of the second connecting rod 3732 is located in the second position of the second connecting rod 3732 (refer to FIG. 7), and therefore the third rotation center 73 is located in the second position of the second connecting rod 3732. If there is a spacing between the first position of the second connecting rod 3732 and the second position of the second connecting rod 3732 (refer to FIG. 7), there is a spacing between the second rotation center 72 and the third rotation center 73.

Therefore, in this embodiment of this application, there is a spacing between the first rotation center 71 and the fourth rotation center 74, and there is a spacing between the second rotation center 72 and the third rotation center 73, so that the first connecting rod 3731, the second connecting rod 3732, the third connecting rod 3733, and the base 3730 form a first four-bar linkage.

The fourth connecting rod 3734 rotates around a fifth rotation center 75 relative to the base 3730, the fourth connecting rod 3734 rotates around a sixth rotation center 76 relative to the fifth connecting rod 3735, the fifth connecting rod 3735 rotates around a seventh rotation center 77 relative to the sixth connecting rod 3736, and the sixth connecting rod 3736 rotates around an eighth rotation center 78 relative to the base 3730.

In addition, the third connection hole 603 of the base 3730 is located in the third position of the base 3730 (refer to FIG. 7), and therefore the fifth rotation center 75 is located in the third position of the base 3730. The fourth connection hole 604 of the base 3730 is located in the fourth position of the base 3730 (refer to FIG. 7), and therefore the eighth rotation center 78 is located in the fourth position of the base 3730. If there is a spacing between the third position of the base 3730 and the fourth position of the base 3730 (refer to FIG. 7), there is a spacing between the fifth rotation center 75 and the eighth rotation center 78.

In addition, the eleventh connection hole 611 of the fifth connecting rod 3735 is located in the third position of the fifth connecting rod 3735 (refer to FIG. 7), and therefore the sixth rotation center 76 is located in the third position of the fifth connecting rod 3735; and the twelfth connection hole 612 of the fifth connecting rod 3735 is located in the fourth position of the fifth connecting rod 3735 (refer to FIG. 7), and therefore the seventh rotation center 77 is located in the fourth position of the fifth connecting rod 3735. If there is a spacing between the third position of the fifth connecting rod 3735 and the fourth position of the fifth connecting rod 3735 (refer to FIG. 7), there is a spacing between the sixth rotation center 76 and the seventh rotation center 77.

Therefore, in this embodiment of this application, there is a spacing between the fifth rotation center 75 and the eighth rotation center 78, and there is a spacing between the sixth rotation center 76 and the seventh rotation center 77, so that the fourth connecting rod 3734, the fifth connecting rod 3735, the sixth connecting rod 3736, and the base 3730 form a second four-bar linkage.

In this embodiment of this application, the two four-bar linkages of the connecting rod assembly 373 can deform, so that the electronic device 1000 can be unfolded or folded. The four-bar linkage is simple in structure, has a few constituent components, and low manufacturing costs. In addition, in a deformation process of the four-bar linkage, the connecting rods of the four-bar linkage restrict each other, so that the four-bar linkage has a determined motion trajectory, and a motion trajectory of the electronic device 1000 can be accurately controlled. In this embodiment of this application, the electronic device 1000 is unfolded or folded through the connecting rod assembly 373, so that manufacturing costs of the electronic device 1000 can be reduced while precise motion of the electronic device 1000 is ensured.

For example, the first four-bar linkage and the second four-bar linkage may include same components, and components of the two mechanisms have a same connection relationship. In some other embodiments, the first four-bar linkage and the second four-bar linkage may alternatively include different quantities and/or structural components, and components of the first four-bar linkage and the second four-bar linkage may have different connection relationships. This is not limited in this application.

For example, the third connecting rod 3733 may be provided with first avoidance space 81, and the first avoidance space 81 is used to avoid the first connecting rod 3731 in a motion process of the third connecting rod 3733. The sixth connecting rod 3736 may be provided with second avoidance space 82, and the second avoidance space 82 is used to avoid the fourth connecting rod 3734 in a motion process of the sixth connecting rod 3736.

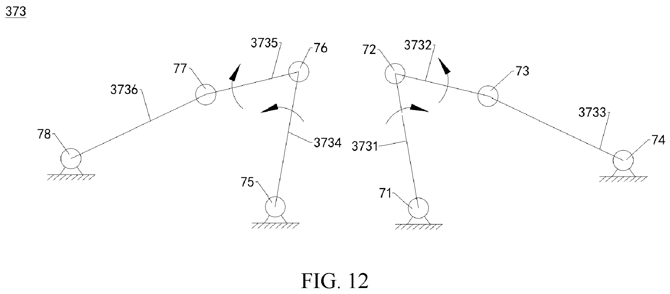

Refer to FIG. 10 to FIG. 12. FIG. 12 is a diagram of a motion process of the connecting rod assembly 373 shown in FIG. 10 in some embodiments.

As shown in FIG. 10 and FIG. 12, when the electronic device 1000 is unfolded, the second connecting rod 3732 and the fifth connecting rod 3735 are located on two sides of the base 3730. As shown in FIG. 11 and FIG. 12, when the electronic device 1000 is folded, and when the electronic device 1000 is folded, the connecting rod assembly 373 can make the second connecting rod 3732 and the fifth connecting rod 3735 be located on a same side of the base 3730 through deformation of the four-bar linkage.

In this embodiment of this application, each connecting rod of the connecting rod assembly 373 can move, so that the electronic device 1000 is unfolded or folded. Specifically, in a process from unfolding to folding of the electronic device 1000, the first connecting rod 3731 rotates clockwise relative to the base 3730, the second connecting rod 3732 rotates anticlockwise, and the third connecting rod 3733 rotates clockwise relative to the base 3730 and then rotates anticlockwise. The fourth connecting rod 3734 rotates anticlockwise relative to the base 3730, the fifth connecting rod 3735 rotates clockwise, and the sixth connecting rod 3736 rotates anticlockwise relative to the base 3730 and then rotates clockwise. The second connecting rod 3732 and the fifth connecting rod 3735 move toward each other, to fold from two sides of the base 3730 to a same side of the base 3730. **In** some other embodiments, in a process from unfolding to folding of the electronic device 1000, the third connecting rod 3733 may also rotate clockwise relative to the base 3730, and the sixth connecting rod 3736 may also rotate anticlockwise relative to the base 3730.

Correspondingly, in a process from folding to unfolding of the electronic device 1000, the first connecting rod 3731 rotates anticlockwise relative to the base 3730, the second connecting rod 3732 rotates clockwise, and the third connecting rod 3733 rotates anticlockwise relative to the base 3730 and then rotates clockwise. The fourth connecting rod 3734 rotates clockwise relative to the base 3730, the fifth connecting rod 3735 rotates anticlockwise, and the sixth connecting rod 3736 rotates clockwise relative to the base 3730 and then rotates anticlockwise. The second connecting rod 3732 and the fifth connecting rod 3735 move toward each other, to unfold relative to each other from a same side of the base 3730 to the two sides of the base 3730.

For example, the third rotation center 73 is located on a side that is of a connection line between the second rotation center 72 and the fourth rotation center 74 and that is away from the base 3730. The seventh rotation center 77 is located on a side that is of a connection line between the sixth rotation center 76 and the eighth rotation center 78 and that is away from the base 3730.

In this embodiment, in the motion process of each connecting rod of the connecting rod assembly 373, the second connecting rod 3732 and the first connecting rod 3731 rotate in opposite directions, and the fifth connecting rod 3735 and the fourth connecting rod 3734 rotate in opposite directions. The third rotation center 73 is located on a side that is of a connection line between the second rotation center 72 and the fourth rotation center 74 and that is away from the base 3730, to avoid a case in which the second rotation center 72, the third rotation center 73, and the fourth rotation center 74 are located on a same straight line. In this way, the second connecting rod 3732 and the third connecting rod 3733 are prevented from being blocked in a process of rotating in opposite directions. The seventh rotation center 77 is located on a side that is of a connection line between the sixth rotation center 76 and the eighth rotation center 78 and that is away from the base 3730, to avoid a case in which the sixth rotation center 76, the seventh rotation center 77, and the eighth rotation center 78 are located on a same straight line. In this way, the fifth connecting rod 3735 and the sixth connecting rod 3736 are prevented from being blocked in a process of rotating in opposite directions.

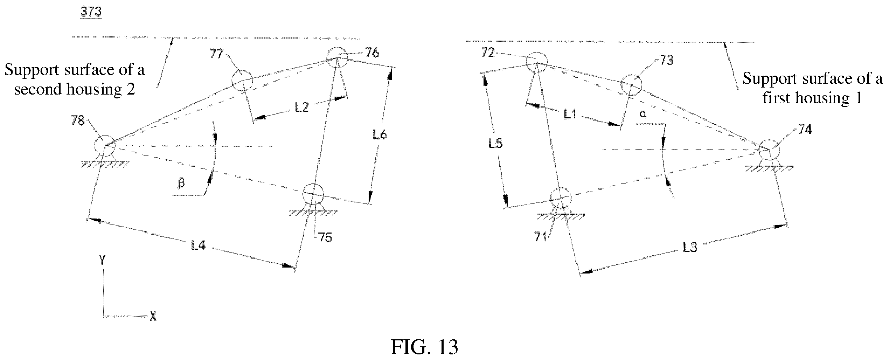

Refer to FIG. 10, FIG. 11, and FIG. 13. FIG. 13 is a diagram of a position relationship between connecting rods of the connecting rod assembly 373 shown in FIG. 10.

The third rotation center 73 is located on a right side of the second rotation center 72, namely, a side away from the second body part 2, and the seventh rotation center is located on a left side of the sixth rotation center, namely, a side away from the first body part 1. In this embodiment of this application, when the electronic device 1000 is unfolded, a side that is of each component of the foldable assembly 3 and that is close to the first body part 1 is the right side, and a side that is of each component of the foldable assembly 3 and that is close to the second body part 2 is the left side.

For example, a distance L1 between the second rotation center 72 and the third rotation center 73 may meet: L1≤20 millimeters, or 1 millimeter≤L1≤20 millimeters, for example, L1 may be 3 millimeters, 7 millimeters, or 12 millimeters; and a distance L2 between the sixth rotation center and the seventh rotation center may meet: L2≤20 millimeters, or 1 millimeter≤L2≤20 millimeters, for example, L2 may be 3 millimeters, 7 millimeters, or 12 millimeters.

In this embodiment, there may be a large distance between the second rotation center 72 and the third rotation center 73, to avoid interference between the first connecting rod 3731 and the third connecting rod 3733 in a motion process; and there may be a large spacing between the sixth rotation center 76 and the seventh rotation center 77, to avoid interference between the fourth connecting rod 3734 and the sixth connecting rod 3736 in the motion process.

The fourth rotation center 74 is located on a right side of the first rotation center 71, namely, a side away from the second body part 2, and the eighth rotation center 78 is located on a left side of the fifth rotation center 75, namely, a side away from the first body part 1. In some other embodiments, the fourth rotation center 74 may be also located on the left side of the first rotation center 71, namely, a side away from the first body part 1, and the eighth rotation center 78 may alternatively be located on the right side of the fifth rotation center 75, namely, a side away from the second body part 2.

For example, a distance L3 between the first rotation center 71 and the fourth rotation center 74 may meet: L3≤5 millimeters, or 2 millimeters≤L3≤5 millimeters, for example, L3 may be 2 millimeters, 2.5 millimeters, or 4 millimeters; and a distance L4 between the fifth rotation center 75 and the eighth rotation center 78 may meet: L4≤5 millimeters, or 2 millimeters≤L4≤5 millimeters, for example, L4 may be 2 millimeters, 2.5 millimeters, or 4 millimeters.

In this embodiment, the distance between the first rotation center 71 and the fourth rotation center 74 is small, and the distance between the fifth rotation center 75 and the eighth rotation center 78 is small, to reduce a width of the connecting rod assembly 373, reduce a width of the foldable assembly 3, and avoid occupying large space and squeezing available space of another component in the electronic device 1000. In this embodiment of this application, a width of a component is a size of the component in a first direction X, and the first direction X is parallel to a plane on which the screen 200 is located and is perpendicular to the axial direction (refer to FIG. 1).

For example, there is a first included angle α between a connection line between the first rotation center 71 and the fourth rotation center 74 and a plane parallel to a first support surface of the first body part 1, and there is a second included angle β between a connection line between the fifth rotation center 75 and the eighth rotation center 78 and a plane parallel to a second support surface of the second body part 2. As shown in FIG. 12, both projection of the first support surface of the first body part 1 and projection of the second support surface of the second body part 2 are straight lines parallel to the first direction X. The first included angle α is an included angle between the connection line between the first rotation center 71 and the fourth rotation center 74 and the first direction X, and the second included angle β is an included angle between the connection line between the fifth rotation center 75 and the eighth rotation center 78 and the first direction X.

In this embodiment, a specific distance needs to be provided between the first rotation center 71 and the fourth rotation center 74, to meet a structural requirement of a connecting rod piece required by motion of the bar linkage. If there is the first included angle α between the connection line between the first rotation center 71 and the fourth rotation center 74 and the plane parallel to the first support surface of the first body part 1, the fourth rotation center 74 is located on a side that is of the first rotation center 71 and that is close to the screen 200, to reduce a distance between the fourth rotation center 74 and the first rotation center 71 in the first direction X, thereby further reducing a width of the connecting rod assembly 373, and further reducing a width of the foldable assembly 3. In this way, more available space is reserved for another component in the electronic device 1000.

In addition, a specific distance needs to be provided between the fifth rotation center 75 and the eighth rotation center 78, to meet a structural requirement of a connecting rod piece required by motion of the bar linkage. If there is the second included angle β between the connection line between the fifth rotation center 75 and the eighth rotation center 78 and the plane parallel to the second support surface of the second body part 2, the eighth rotation center 78 is located on a side that is of the fifth rotation center 75 and that is close to the screen 200, to reduce a distance between the eighth rotation center 78 and the fifth rotation center 75 in the first direction X, thereby further reducing a width of the connecting rod assembly 373, and further reducing a width of the foldable assembly 3. In this way, more available space is reserved for another component in the electronic device 1000.

For example, the first included angle α may meet: The first included angle α≤25°, or 5°≤the first included angle α≤25°, for example, 7°, 10°, or 13°. The second included angle β may meet: The second included angle β≤25°, or 5°≤the second included angle β≤25°, for example, 7°, 10°, or 13°.

For example, the first included angle α may be equal to the second included angle β, or may be unequal to the second included angle β. This is not limited in this application.

For example, a distance L5 between the first rotation center 71 and the second rotation center 72 may meet: L5≤4 millimeters, or 1 millimeter≤L5≤4 millimeters, for example, L5 may be 1 millimeter, 2.5 millimeters, or 4 millimeters; and a distance L6 between the fifth rotation center 75 and the sixth rotation center may meet: L6≤4 millimeters, or 1 millimeter≤L6≤4 millimeters, for example, L6 may be 1 millimeter, 2.5 millimeters, or 4 millimeters.

As shown in FIG. 11, when the electronic device 1000 is unfolded, both the first connecting rod 3731 and the fifth connecting rod 3735 are approximately parallel to a second direction Y. Sizes of the first connecting rod 3731 and the fifth connecting rod 3735 affect a thickness of the foldable assembly 3. Smaller sizes of the first connecting rod 3731 and the fifth connecting rod 3735 indicate a smaller thickness of the foldable assembly 3. In this embodiment of this application, the second direction Y is perpendicular to the screen 200. A thickness of a component is a size of the component in the second direction Y. In this embodiment, the distance between the first rotation center 71 and the second rotation center 72 is small, and the distance between the fifth rotation center 75 and the sixth rotation center is small, that is, a size of the first connecting rod 3731 is small, and a size of the fifth connecting rod 3735 is small, so that the thickness of the foldable assembly 3 is small, the thickness of the electronic device 1000 is reduced, and requirements for miniaturization, lightness and thinness are met.

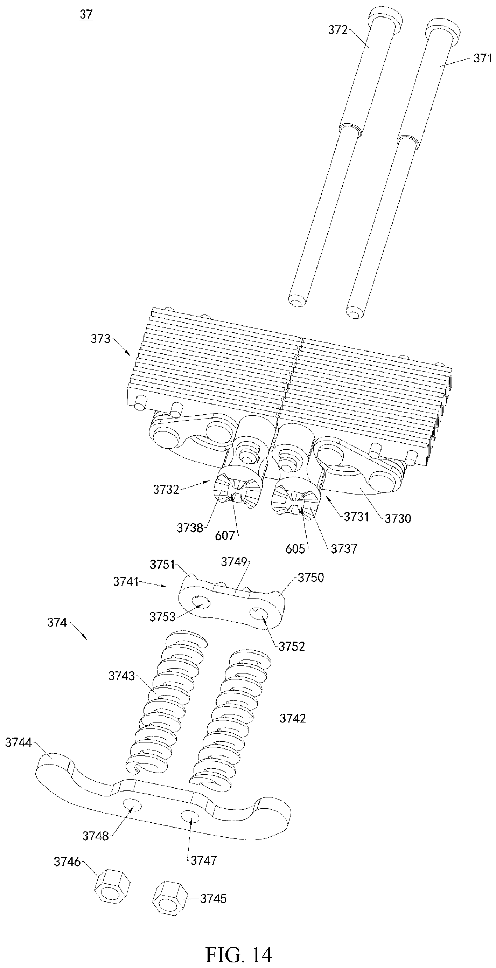

FIG. 14 is a schematic exploded view of a partial structure of the first connecting assembly 37 shown in FIG. 6.

For example, the first connecting assembly 37 may further include a first rotatable connecting shaft 371 and a second rotatable connecting shaft 372. The first rotatable connecting shaft 371 and the second rotatable connecting shaft 372 are inserted into the connecting rod assembly 373 and the damping assembly 374.

For example, the damping assembly 374 of the first connecting assembly 37 may include a clamping member 3741, a first elastic piece 3742, a second elastic piece 3743, a fastening member 3744, a first fastener 3745, and a second fastener 3746. The clamping member 3741, the first elastic piece 3742, the second elastic piece 3743, the fastening member 3744, the first fastener 3745, and the second fastener 3746.

The fastening member 3744 has a first through hole 3747 and a second through hole 3748 that are spaced from each other.

For example, a plurality of first protruding blocks 3737 are disposed on a side that is of the first connecting rod 3731 and that is away from the base 3730, and the plurality of first protruding blocks 3737 are spaced from each other around the fifth connection hole 605 of the first connecting rod 3731, and are fastened on a same side of the first connecting rod 3731. A first clamping slot is formed between two adjacent first protruding blocks 3737.

For example, a plurality of second protruding blocks 3738 are disposed on a side that is of the fourth connecting rod 3734 and that is away from the base 3730, and the plurality of second protruding blocks 3738 are spaced from each other around the seventh connection hole 607 of the fourth connecting rod 3734, and are fastened on a same side of the fourth connecting rod 3734. A second clamping slot is formed between two adjacent second protruding blocks 3738.

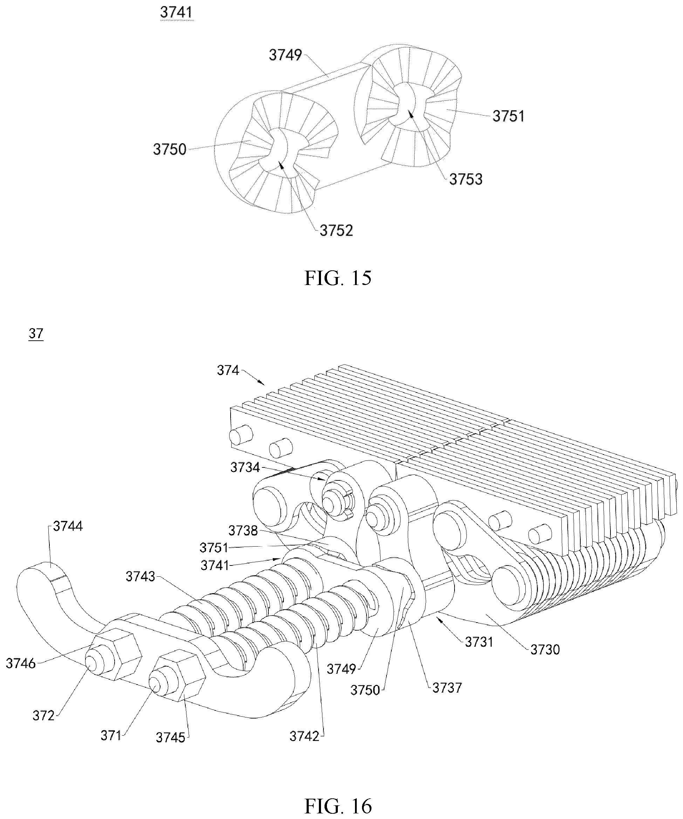

Refer to FIG. 14 and FIG. 15. FIG. 15 is a diagram of a structure of the clamping member 3741 in FIG. 14 from another perspective.

For example, the clamping member 3741 may include a clamping plate 3749, a plurality of third protruding blocks 3750, and a plurality of fourth protruding blocks 3751. The clamping plate 3749 may be provided with a third through hole 3752 and a fourth through hole 3753 that are spaced from each other. The plurality of third protruding blocks 3750 and the plurality of fourth protruding blocks 3751 are fastened on a same side surface of the clamping plate 3749. The plurality of third protruding blocks 3750 are spaced from each other around the third through hole 3752, and a third clamping slot is formed between two adjacent third protruding blocks 3750. The plurality of fourth protruding blocks 3751 are spaced from each other around the fourth through hole 3753, and a fourth clamping slot is formed between two adjacent fourth protruding blocks 3751.

For example, the clamping member 3741 may be an integrally formed mechanical part, so as to have high structural strength.

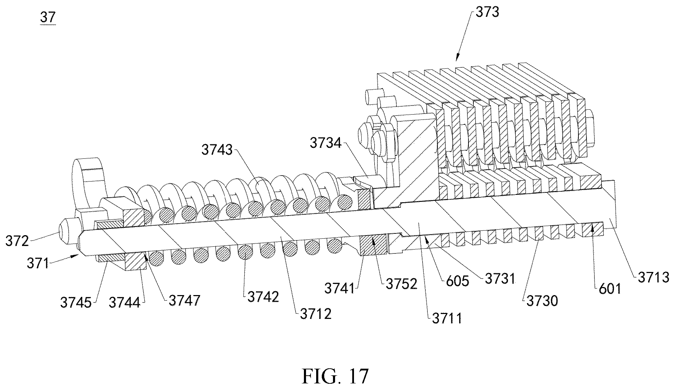

Refer to FIG. 16, and FIG. 17. FIG. 16 is a diagram of a structure of the first connecting assembly 37 shown in FIG. 6. FIG. 17 is a diagram of an internal structure of the first connecting assembly 37 shown in FIG. 16.

The first rotatable connecting shaft 371 passes through the first connection hole 601 of the base 3730 of the connecting rod assembly 373, the fifth connection hole 605 of the first connecting rod 3731, the third through hole 3752 of the clamping member 3741, and the first through hole 3747 of the fastening member 3744, and is sequentially inserted into the base 3730, the first connecting rod 3731, the clamping member 3741, the first elastic piece 3742, the fastening member 3744, and the first fastener 3745. The second rotatable connecting shaft 372 is sequentially inserted into the base 3730, the fourth connecting rod 3734, the clamping member 3741, the second elastic piece 3743, the fastening member 3744, and the second fastener 3746.

A plurality of first protruding blocks 3737 of the first connecting rod 3731 and a plurality of third protruding blocks 3750 of the clamping member 3741 may be staggered to form a first clamping structure, the plurality of first protruding blocks 3737 may be correspondingly clamped into the plurality of third clamping slots, and the plurality of third protruding blocks 3750 may be correspondingly clamped into the plurality of first clamping slots. The plurality of first protruding blocks 3737 of the first connecting rod 3731 and the plurality of third protruding blocks 3750 of the clamping member 3741 may alternatively be disposed in a one-to-one correspondence to form a second clamping structure, and the plurality of first clamping slots and the plurality of third clamping slots are disposed in a one-to-one correspondence.

A plurality of second protruding blocks 3738 of the fourth connecting rod 3734 and a plurality of fourth protruding blocks 3751 of the clamping member 3741 may be staggered to form a third clamping structure, the plurality of second protruding blocks 3738 may be correspondingly clamped into the plurality of third clamping slots, and the plurality of fourth protruding blocks 3751 may be correspondingly clamped into the plurality of first clamping slots. The plurality of second protruding blocks 3738 of the fourth connecting rod 3734 and the plurality of fourth protruding blocks 3751 of the clamping member 3741 may alternatively be disposed in a one-to-one correspondence to form a fourth clamping structure, and the plurality of first clamping slots and the plurality of third clamping slots are disposed in a one-to-one correspondence.

The first elastic piece 3742 is located between the clamping plate 3749 of the clamping member 3741 and the fastening member 3744. The first elastic piece 3742 has a mounting deformation amount in a compressed state. The mounting deformation amount of the first elastic piece 3742 is a deformation amount of the first elastic piece 3742 when the electronic device 1000 is unfolded. In this embodiment of this application, the deformation amount of the first elastic piece 3742 is a difference between a length of the first elastic piece 3742 between the fastening member 3744 and the clamping plate 3749 of the clamping member 3741 and a length of the first elastic piece 3742 in a relaxed state, and no elastic force is generated when the first elastic piece 3742 is in the relaxed state. The first fastener 3745 is fastened to the first rotatable connecting shaft 371. The second elastic piece 3743 is located between the clamping plate 3749 of the clamping member 3741 and the fastening member 3744. The second elastic piece 3743 has a mounting deformation amount in a compressed state. The mounting deformation amount of the second elastic piece 3743 is a deformation amount of the second elastic piece 3743 when the electronic device 1000 is unfolded. In this embodiment of this application, the deformation amount of the second elastic piece 3743 is a difference between a length of the second elastic piece 3743 between the fastening member 3744 and the clamping plate 3749 of the clamping member 3741 and a length of the second elastic piece 3743 in a relaxed state, and no elastic force is generated when the second elastic piece 3743 is in the relaxed state. The second fastener 3746 is fastened to the second rotatable connecting shaft 372.

In this embodiment, the damping assembly 374 provides a motion damping force for motion of the first connecting rod 3731 and the fourth connecting rod 3734.

In a process in which the first connecting rod 3731 rotates relative to the base 3730, the plurality of first protruding blocks 3737 and the plurality of third protruding blocks 3750 change in relative position, for example, may change from the first clamping structure to the second clamping structure. In a conversion process of the clamping structure, the clamping member 3741 can be away from the first connecting rod 3731, and the first elastic piece 3742 is further compressed, to generate a motion damping force. The first connecting rod 3731 is squeezed by the motion damping force, and pressure between the first connecting rod 3731 and the base 3730 is increased, so that the first connecting rod 3731 needs a specific driving force to rotate relative to the base 3730, that is, the damping assembly 374 provides a motion damping force for motion of the first connecting rod 3731.

In a process in which the fourth connecting rod 3734 rotates relative to the base 3730, the plurality of second protruding blocks 3738 and the plurality of fourth protruding blocks 3751 change in relative position, for example, may change from the third clamping structure to the fourth clamping structure. In a conversion process of the clamping structure, the clamping member 3741 can be away from the fourth connecting rod 3734, and the second elastic piece 3743 is further compressed, to generate a motion damping force. The fourth connecting rod 3734 is squeezed by the motion damping force, and pressure between the fourth connecting rod 3734 and the base 3730 is increased, so that the fourth connecting rod 3734 needs a specific driving force to rotate relative to the base 3730, that is, the damping assembly 374 provides a motion damping force for motion of the fourth connecting rod 3734.

The first fastener 3745 is fastened to the first rotatable connecting shaft 371, to limit a distance between the fastening member 3744 and the clamping plate 3749 of the clamping member 3741, thereby limiting a length of the first elastic piece 3742 between the fastening member 3744 and the clamping plate 3749 of the clamping member 3741. In this case, the first elastic piece 3742 is in a compressed state.

For example, the first fastener 3745 may be configured to adjust a mounting deformation amount of the first elastic piece 3742, to adjust a magnitude of an elastic damping force that can be provided by the first elastic piece 3742. The first fastener 3745 moves relative to the first rotatable connecting shaft 371, to adjust fastening positions between the first fastener 3745 and the first rotatable connecting shaft 371, so as to adjust a distance between the fastening member 3744 and the clamping plate 3749 of the clamping member 3741, thereby adjusting a mounting deformation amount of the first elastic piece 3742. In addition, an elastic force of the first elastic piece 3742 is in direct proportion to the mounting deformation amount of the first elastic piece 3742. A larger mounting deformation amount of the first elastic piece 3742 indicates a larger elastic force of the first elastic piece 3742, and a larger elastic damping force that can be provided by the first elastic piece 3742. Therefore, the first fastener 3745 may increase the mounting deformation amount of the first elastic piece 3742 to increase the elastic damping force that can be provided by the first elastic piece 3742, or may decrease the mounting deformation amount of the first elastic piece 3742 to reduce the elastic damping force that can be provided by the first elastic piece 3742. That is, the first fastener 3745 may be configured to adjust the mounting deformation amount of the first elastic piece 3742, to adjust the elastic damping force that can be provided by the first elastic piece 3742.

The second fastener 3746 is fastened to the second rotatable connecting shaft 372, to limit a distance between the fastening member 3744 and the clamping plate 3749 of the clamping member 3741, thereby limiting a length of the second elastic piece 3743 between the fastening member 3744 and the clamping plate 3749 of the clamping member 3741. In this case, the second elastic piece 3743 is in a compressed state.

For example, the second fastener 3746 may be configured to adjust a mounting deformation amount of the second elastic piece 3743, to adjust a magnitude of an elastic damping force that can be provided by the second elastic piece 3743. The second fastener 3746 moves relative to the second rotatable connecting shaft 372, to adjust fastening positions between the second fastener 3746 and the second rotatable connecting shaft 372, so as to adjust a distance between the fastening member 3744 and the clamping plate 3749 of the clamping member 3741, thereby adjusting a mounting deformation amount of the second elastic piece 3743. In addition, an elastic force of the second elastic piece 3743 is in direct proportion to the mounting deformation amount of the second elastic piece 3743. A larger mounting deformation amount of the second elastic piece 3743 indicates a larger elastic force of the second elastic piece 3743, and a larger elastic damping force that can be provided by the second elastic piece 3743. Therefore, the second fastener 3746 may increase the mounting deformation amount of the second elastic piece 3743 to increase the elastic damping force that can be provided by the second elastic piece 3743, or may decrease the mounting deformation amount of the second elastic piece 3743 to reduce the elastic damping force that can be provided by the second elastic piece 3743. That is, the second fastener 3746 may be configured to adjust the mounting deformation amount of the second elastic piece 3743, to adjust the elastic damping force that can be provided by the second elastic piece 3743.

For example, the fastening member 3744 may be fastened to the base 4 (not shown in the figure). The fastening member 3744 can move relative to the second rotatable connecting shaft 372. When the first fastener 3745 moves relative to the first rotatable connecting shaft 371 and the second fastener 3746 moves relative to the second rotatable connecting shaft 372, the fastening member 3744 may also move with the first fastener 3745 and the second fastener 3746, and is fastened on the base 4 when the first fastener 3745 is fastened on the first rotatable connecting shaft 371 and the second fastener 3746 is fastened on the second rotatable connecting shaft 372.

**In** this embodiment, the damping assembly 374 is connected to the first connecting rod 3731 and the fourth connecting rod 3734, and provides a motion damping force for motion of the first connecting rod 3731 and the fourth connecting rod 3734, so that motion of another connecting rod is also affected by the motion damping force through interaction between the first connecting rod 3731 and the another connecting rod. In this way, a motion damping force is provided for motion between connecting rods of the connecting rod assembly 373.

In some other embodiments, the damping assembly 374 may alternatively be connected to the first connecting rod 3731 or the fourth connecting rod 3734. This is not limited in this application.

For example, as shown FIG. 17, the first rotatable connecting shaft 371 may include a first shaft body 3711 and a second shaft body 3712 that are connected to each other. The first shaft body 3711 is inserted into the base 3730 and the first connecting rod 3731, and is connected to the second shaft body 3712, where the second shaft body 3712 is at least partially located in the first connecting rod 3731. An outer diameter of the second shaft body 3712 is less than an outer diameter of the first shaft body 3711.

In this embodiment, the outer diameters of the first shaft body 3711 and the second shaft body 3712 are not equal, and a limiting boss may be formed at a joint between the first shaft body 3711 and the second shaft body 3712. In addition, the second shaft body 3712 is at least partially located in the first connecting rod 3731, so that a hole wall of the fifth connection hole 605 of the first connecting rod 3731 is in contact with or abuts against the limiting boss, to limit relative positions between the first connecting rod 3731 and the base 3730. This prevents the first connecting rod 3731 from moving in a direction close to the base 3730 under an action of a motion damping force and excessively squeezing the base 3730, and improves reliability of the base 3730. In addition, in this embodiment of this application, the limiting boss is disposed on the first rotatable connecting shaft 371, and no other structure needs to be added to implement limiting, so that the structure is simple, and manufacturing costs are further reduced.

In some other embodiments, the outer diameter of the first shaft body 3711 may alternatively be less than the outer diameter of the second shaft body 3712. This is not limited in embodiments of this application.

For example, a limiting flange 3713 is disposed at an end that is of the first shaft body 3711 and that is away from the second shaft body 3712, and an outer diameter of the limiting flange 3713 is greater than the outer diameter of the first shaft body 3711, to prevent a component inserted into the first shaft body 3711 from being detached from the shaft.

For example, the second rotatable connecting shaft 372 may also include a third shaft body and a fourth shaft body (not shown in the figure) that are connected to each other. The third shaft body is inserted into the base 3730 and the fourth connecting rod 3734, and is connected to the fourth shaft body, where the fourth shaft body is at least partially located in the fourth connecting rod 3734. An outer diameter of the fourth shaft body is less than an outer diameter of the third shaft body.

In this embodiment, outer diameters of the third shaft body and the fourth shaft body are not equal, and a limiting boss may be formed at a joint between the third shaft body and the fourth shaft body. In addition, the fourth shaft body is at least partially located in the fourth connecting rod 3734, so that a hole wall of the seventh connection hole of the fourth connecting rod 3734 is in contact with or abuts against the limiting boss, to limit relative positions between the fourth connecting rod 3734 and the base 3730. This prevents the fourth connecting rod 3734 from moving in a direction close to the base 3730 under an action of a motion damping force and excessively squeezing the base 3730, and improves reliability of the base 3730. In addition, in this embodiment of this application, the limiting boss is disposed on the second rotatable connecting shaft 372, and no other structure needs to be added to implement limiting, so that the structure is simple, and manufacturing costs are further reduced.

In some other embodiments, the outer diameter of the third shaft body may alternatively be less than the outer diameter of the fourth shaft body. This is not limited in embodiments of this application.

For example, a limiting flange is disposed at an end that is of the third shaft body and that is away from the fourth shaft body, and an outer diameter of the limiting flange is greater than the outer diameter of the third shaft body.

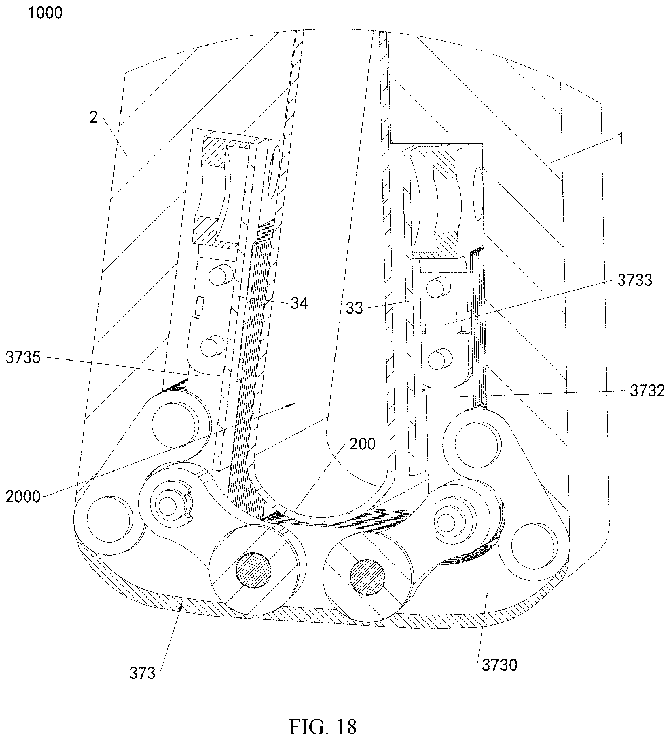

FIG. 18 is a diagram of a partial internal structure of the electronic device 1000 in FIG. 2 that is folded.

The second connecting rod 3732 of the connecting rod assembly 373 of the first connecting assembly 37 is fastened to the first support member 31 through the first fastening member 33, and the fifth connecting rod 3735 of the connecting rod assembly 373 of the first connecting assembly 37 is fastened to the second support member 32 through the second fastening member 34.

The first body part 1 is fastened to the first fastening member 33, and the second body part 2 is fastened to the second fastening member 34. The second connecting rod 3732 of the connecting rod assembly 373 of the first connecting assembly 37 can be connected to the first body part 1 through the first fastening member 33, and the fifth connecting rod 3735 of the connecting rod assembly 373 of the first connecting assembly 37 can be connected to the second body part 2 through the second fastening member 34. Each connecting rod of the connecting rod assembly 373 can move, so that the second connecting rod 3732 and the fifth connecting rod 3735 are unfolded or folded relative to each other. Therefore, the first body part 1 and the second body part 2 can be unfolded or folded relative to each other through motion of each connecting rod of the connecting rod assembly 373, namely, deformation of the connecting rod assembly 373, so that the electronic device 1000 is unfolded or folded.

In addition, refer to FIG. 17 and FIG. 18. The damping assembly 374 provides a motion damping force for motion between connecting rods of the connecting rod assembly 373, that is, the damping assembly 374 can provide a motion damping force in a deformation process of the connecting rod assembly 373, and the first body part 1 and the second body part 2 can be unfolded or folded relative to each other through deformation of the connecting rod assembly 373. Therefore, in a process in which the first body part 1 and the second body part 2 are unfolded or folded relative to each other, the damping assembly 374 can provide a motion damping force, so that the user can sense resistance, to obtain good hand-feeling experience of unfolding and folding. This improves mechanism operation experience of the electronic device 1000. In addition, the damping assembly 374 may further suspend deformation of the connecting rod assembly 373, so that the first body part 1 and the second body part 2 can stay at some positions, to improve user experience.

In addition, as shown in FIG. 18, when the electronic device 1000 is folded, a spacing between the first support member 31 and the second support member 32 gradually increases in a direction close to the base 3730, the first support member 31, the foldable assembly 3, and the second support member 32 form screen accommodating space 2000, and a part of the screen 200 may be located in the screen accommodating space 2000.

In this embodiment, when the electronic device 1000 is folded, the first body part 1 and the second body part 2 are inclined to each other, and the spacing between the first body part 1 and the second body part 2 gradually increases in a direction close to the base 3730, so that the first body part 1, the first support member 31, the third support member 39, the second support member 32, and the second body part 2 jointly form a "baseball-shaped" screen accommodating space 2000. When the electronic device 1000 is folded, a middle part of the screen 200 is bent, and a size of a side that is of the screen accommodating space 2000 and that is close to the foldable assembly 3 is large, so that accommodating space can be provided for the screen 200, a natural bending radian of the screen 200 can be maintained, and the first support member 31, the second support member 32, and the foldable assembly 3 are prevented from squeezing the screen 200, thereby improving reliability of the screen 200.

For example, an upper surface of the third support member 39 is a flat surface, so that a flat support environment can be provided for the screen 200. In some embodiments, the third support member 39 may be of a plate-like structure. In some other embodiments, the third support member 39 may alternatively be of another structure. This is not limited in this application.

An embodiment of this application further provides another electronic device 1000. In some other embodiments of this application, the electronic device 1000 may include a body 100 and a screen 200, and the screen 200 is mounted on the body 100. The body 100 may include a first body part 1, a second body part 2, a foldable assembly 3, and a base 4. In this embodiment, for structures of the screen 200, the first body part 1, the second body part 2, and the base 4 of the electronic device 1000, and a connection relationship between the foldable assembly 3 and the base 4, refer to structures of the screen 200, the first body part 1, the second body part 2, and the base 4 of the electronic device 1000 shown in FIG. 3, and the connection relationship between the foldable assembly 3 and the base 4.

The foldable assembly 3 may be connected between the first body part 1 and the second body part 2, and the first body part 1 and the second body part 2 may be unfolded or folded relative to each other through the foldable assembly 3, so that the electronic device 1000 is unfolded or folded.

The base 4 is located on a side that is of the foldable assembly 3 and that is away from the screen 200. The foldable assembly 3 is mounted on the base 4. For example, mounting structures such as a plurality of protrusions and grooves may be provided on a side that is of the base 4 and that faces the screen 200, and are configured to cooperate with the foldable assembly 3, so that the foldable assembly 3 is mounted on the base 4.

For example, the following describes, with reference to the accompanying drawings, a structure of the foldable assembly 3 in some other embodiments and a connection relationship between the foldable assembly 3 and both the first body part 1 and the second body part 2.

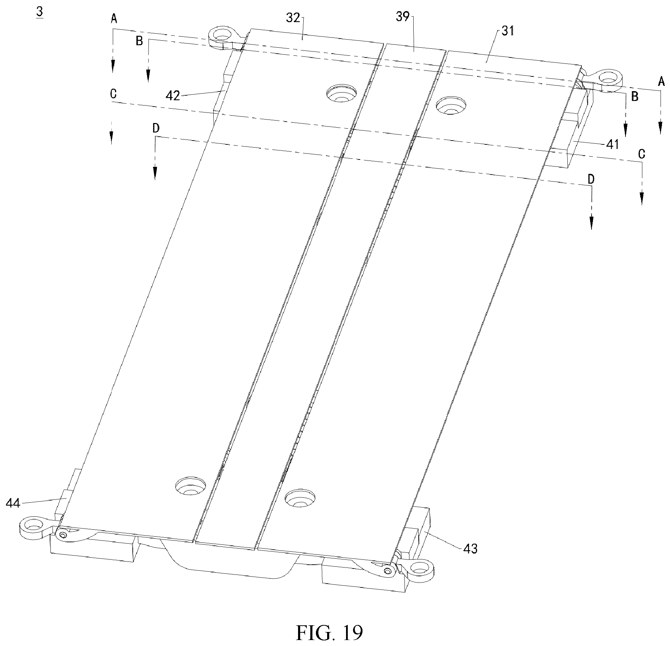

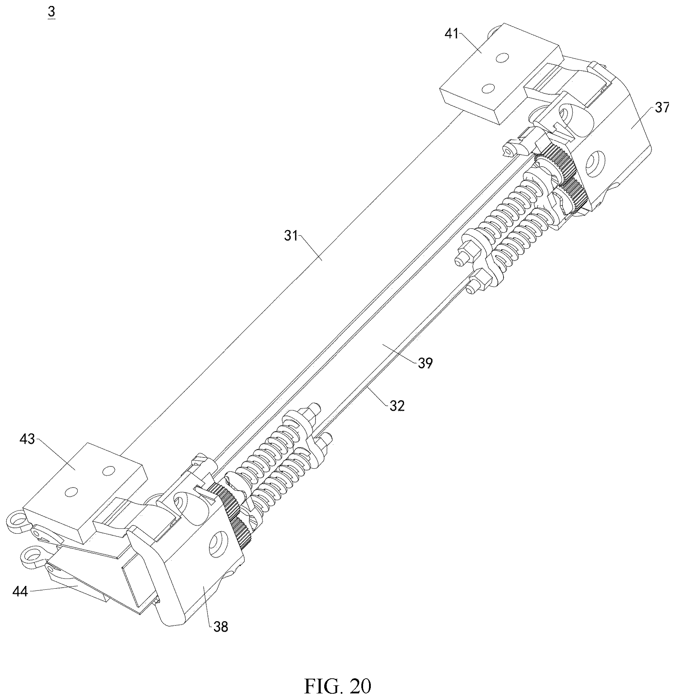

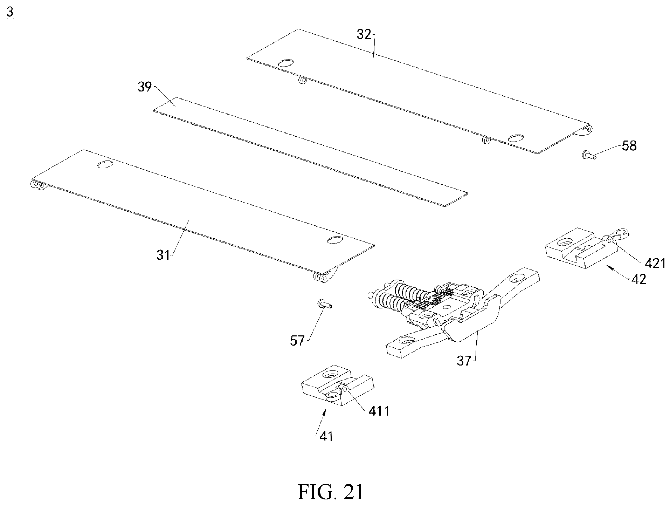

Refer to FIG. 19 to FIG. 21. FIG. 19 is a diagram of a structure of the foldable assembly 3 shown in FIG. 3 in some other embodiments. FIG. 20 is a diagram of a structure of the foldable assembly 3 shown in FIG. 19 that is folded. FIG. 21 is a schematic exploded view of a partial structure of the foldable assembly 3 shown in FIG. 19.

In some embodiments, the foldable assembly 3 may include a first support member 31, a second support member 32, a third support member 39, a first connector 41, a second connector 42, a third connector 43, a fourth connector 44, a first connecting assembly 37, and a second connecting assembly 38.

The first connecting assembly 37 and the second connecting assembly 38 are spaced from each other in an axial direction, and the first support member 31 and the second support member 32 are respectively connected to two sides of the first connecting assembly 37 and the second connecting assembly 38. The third support member 39 is fastened between the first connecting assembly 37 and the second connecting assembly 38.

The first connector 41 and the second connector 42 are respectively located on two sides of the first connecting assembly 37. One side of the first connecting assembly 37 is rotatably connected to the first support member 31 through the first connector 41, and the other side of the first connecting assembly 37 is rotatably connected to the second support member 32 through the second connector 42. The third connector 43 and the fourth connector 44 are respectively located on two sides of the second connecting assembly 38. One side of the second connecting assembly 38 is rotatably connected to the first support member 31 through the third connector 43, and the other side of the second connecting assembly 38 is rotatably connected to the second support member 32 through the fourth connector 44.

In this embodiment, in a process in which the first connecting assembly 37 and the second connecting assembly 38 deform, the first support member 31 and the second support member 32 can rotate relative to the first connecting assembly 37 and the second connecting assembly 38. Therefore, the first support member 31, the second support member 32, the first connecting assembly 37, and the second connecting assembly 38 jointly form a main motion mechanism of the foldable assembly 3. The first support member 31, the second support member 32, the first connecting assembly 37, and the second connecting assembly 38 can deform, so that the foldable assembly 3 is relatively unfolded or folded.

When the electronic device 1000 is unfolded, the first support member 31 and the second support member 32 are located on two sides of the third support member 39. For example, when the electronic device 1000 is unfolded, the first support member 31 and the second support member 32 may be flush with each other, and form a support plane with the third support member 39, to provide a flat support environment for the screen 200. In some other embodiments, when the electronic device 1000 is unfolded, there may alternatively be an included angle between the first support member 31 and the second support member 32. This is not limited in this application.

When the electronic device 1000 is folded, the first support member 31 and the second support member 32 are located on a same side of the third support member 39. The first support member 31, the second support member 32, and the third support member 39 form screen accommodating space, and a part of the screen 200 may be located in the screen accommodating space, to meet a folding and storage requirement of the screen 200, so that a risk of damage to the screen 200 is low and reliability is high.

For the second connecting assembly 38, refer to a design of the first connecting assembly 37. Details are not described in this application again. The second connecting assembly 38 and the first connecting assembly 37 include a same component, and an arrangement position of each component of the second connecting assembly 38 is symmetrical to an arrangement position of each component of the first connecting assembly 37.

For example, the first connector 41 may be provided with a fifth rotatable connector 411. The fifth rotatable connector 411 may be provided with a through hole. The second connector 42 may be provided with a sixth rotatable connector 421, and the sixth rotatable connector 421 may be provided with a through hole.

For example, as shown in FIG. 21, the foldable assembly 3 may further include a seventh pin shaft 57 and an eighth pin shaft 58. The fifth rotatable connector 411 of the first connector 41 can be rotatably connected to the first support member 31 through the seventh pin shaft 57, and the first connector 41 can be further fastened to the first connecting assembly 37, so that the first connecting assembly 37 is rotatably connected to the first support member 31. The sixth rotatable connector 421 of the second connector 42 can be rotatably connected to the second support member 32 through the eighth pin shaft 58, and the second connector 42 can further be fastened to the first connecting assembly 37, so that the first connecting assembly 37 is rotatably connected to the second support member 32. In some other embodiments, the first support member 31 may alternatively be rotatably connected to a component of the first connecting assembly 37 directly without using the first connector 41, and the second support member 32 may alternatively be rotatably connected to a component of the first connecting assembly 37 directly without using the second connector 42. This is not limited in this application.

In addition, for a connection structure between the second connecting assembly 38 and both the first support member 31 and the second support member 32, refer to the connection structure between the first connecting assembly 37 and both the first support member 31 and the second support member 32. Details are not described in this application.

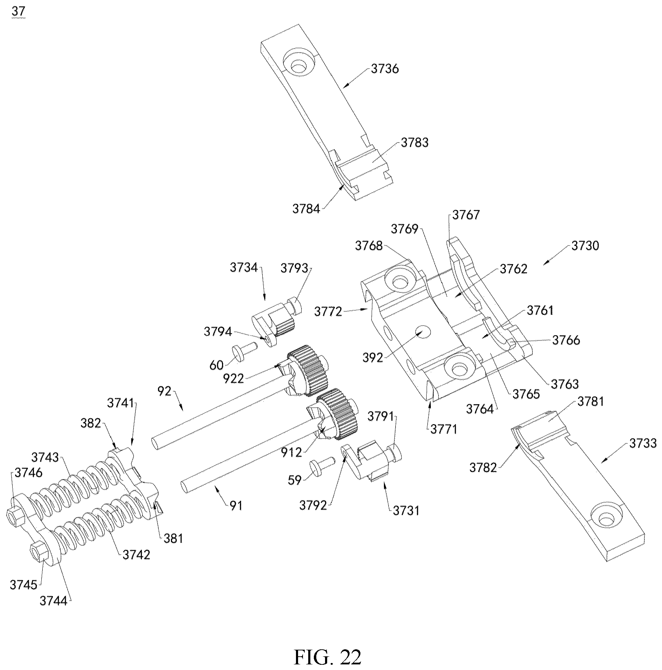

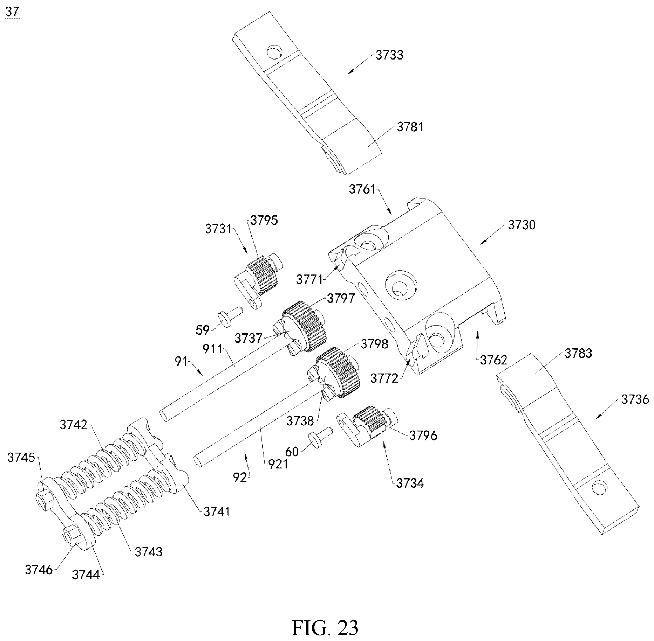

Refer to FIG. 22 and FIG. 23. FIG. 22 is a schematic exploded view of a partial structure of the first connecting assembly 37 shown in FIG. 21. FIG. 23 is a diagram of a partial exploded structure of the first connecting assembly 37 shown in FIG. 22 from another perspective. An angle of view in FIG. 23 is reversed leftward and rightward relative to an angle of view in FIG. 22.

In some embodiments, the first connecting assembly 37 may include a base 3730, a first connecting rod 3731, a third connecting rod 3733, a fourth connecting rod 3734, a sixth connecting rod 3736, a ninth pin shaft 59, a tenth pin shaft 60, a first synchronous gear 91, a second synchronous gear 92, a clamping member 3741, a first elastic piece 3742, a second elastic piece 3743, a fastening member 3744, a first fastener 3745, and a second fastener 3746.

For example, as shown in FIG. 22, the base 3730 may be provided with a first arc-shaped groove 3761 and a second arc-shaped groove 3762. The first arc-shaped groove 3761 and the second arc-shaped groove 3762 are symmetrically provided on left and right sides of the base 3730.

In some embodiments, a groove wall of the first arc-shaped groove 3761 may include a first groove wall 3763 and a second groove wall 3764 that are disposed opposite to each other, and a third groove wall 3765 connected between the first groove wall 3763 and the second groove wall 3764, where the third groove wall 3765 may be an arc surface. The first groove wall 3763 and/or the second groove wall 3764 may be provided with an arc-shaped limiting member 3766. The arc-shaped limiting member 3766 can cooperate with an arc-shaped groove of another component of the electronic device 1000, so that the arc-shaped groove of the another structure slides along the arc-shaped limiting member 3766, thereby limiting a motion trajectory of the another component. A groove wall of the second arc-shaped groove 3762 may include a fourth groove wall 3767 and a fifth groove wall 3768 that are disposed opposite to each other, and a sixth groove wall 3769 connected between the fourth groove wall 3767 and the fifth groove wall 3768, where the sixth groove wall 3769 may be an arc surface. The fourth groove wall 3767 and/or the fifth groove wall 3768 may be provided with an arc-shaped limiting member 3766.

For example, as shown in FIG. 23, a first mounting groove 3771 and a second mounting groove 3772 may be further provided on the base 3730. The first mounting groove 3771 and the second mounting groove 3772 are oppositely provided on left and right sides of the base 3730. Openings of the first mounting groove 3771 and the second mounting groove 3772 extend to a lower surface of the base 3730. In some other embodiments, the openings of the first mounting groove 3771 and the second mounting groove 3772 may alternatively extend to an upper surface of the base 3730. In this embodiment of this application, a side that is of a component of the foldable assembly 3 and that faces the screen 200 is an upper side, and a side that is away from the screen 200 is a lower side.

For example, one or more second fastening holes 392 may be provided on the upper side of the base 3730. The second fastening hole 392 is configured to allow the fastener (not shown in the figure) to pass through.

For example, a first arc-shaped arm 3781 may be disposed at an end of the third connecting rod 3733, and the first arc-shaped arm 3781 is located at an end that is of the third connecting rod 3733 and that is rotatably connected to the base 3730. The first arc-shaped arm 3781 of the third connecting rod 3733 may be provided with a first limiting slot 3782. The first arc-shaped arm 3781 of the third connecting rod 3733 may have two first limiting slots 3782, which are respectively provided on two sides of the first arc-shaped arm 3781 of the third connecting rod 3733. In some other embodiments, the first arc-shaped arm 3781 of the third connecting rod 3733 may alternatively have one first limiting slot 3782, which is provided on any side of the first arc-shaped arm 3781 of the third connecting rod 3733. An end of the sixth connecting rod 3736 may be provided with a second arc-shaped arm 3783, and the second arc-shaped arm 3783 is located at an end that is of the sixth connecting rod 3736 and that is rotatably connected to the base 3730. The second arc-shaped arm 3783 of the sixth connecting rod 3736 may be provided with a second limiting slot 3784. The second arc-shaped arm 3783 of the sixth connecting rod 3736 may have two second limiting slots 3784, which are respectively provided on two sides of the second arc-shaped arm 3783 of the sixth connecting rod 3736. In some other embodiments, the second arc-shaped arm 3783 of the sixth connecting rod 3736 may alternatively have one second limiting slot 3784, which is provided on any side of the second arc-shaped arm 3783 of the sixth connecting rod 3736.

For example, as shown in FIG. 22, one end of the first connecting rod 3731 may be provided with a first rotating end 3791, and the other end of the first connecting rod 3731 may be provided with a first mounting hole 3792. One end of the fourth connecting rod 3734 may be provided with a second rotating end 3793, and the other end of the fourth connecting rod 3734 may be provided with a second mounting hole 3794. The first mounting hole 3792 of the first connecting rod 3731 may be rotatably connected to another component of the electronic device 1000 through the ninth pin shaft 59, and the second mounting hole 3794 of the fourth connecting rod 3734 may be rotatably connected to another component of the electronic device 1000 through the tenth pin shaft 60.

For example, the first rotating end 3791 of the first connecting rod 3731 may be provided with a limiting flange, and an outer diameter of the limiting flange is greater than an outer diameter of the first rotating end 3791 of the first connecting rod 3731. The second rotating end 3793 of the fourth connecting rod 3734 may be provided with a limiting flange, and an outer diameter of the limiting flange is greater than an outer diameter of the second rotating end 3793 of the fourth connecting rod 3734.

For example, as shown in FIG. 23, a plurality of first protrusions 3795 may be disposed on a middle part of the first connecting rod 3731. The plurality of first protrusions 3795 are sequentially spaced from each other along an outer surface of the middle part of the first connecting rod 3731. The plurality of first protrusions 3795 may occupy a part of the outer surface of the middle part of the first connecting rod 3731, to reduce space occupied by the plurality of first protrusions 3795. A plurality of second protrusions 3796 may be disposed on a middle part of the fourth connecting rod 3734. The plurality of second protrusions 3796 are sequentially spaced from each other along an outer surface of the middle part of the fourth connecting rod 3734. The plurality of second protrusions 3796 may occupy a part of the outer surface of the middle part of the fourth connecting rod 3734, to reduce space occupied by the plurality of second protrusions 3796.

For example, the first synchronous gear 91 is provided with a plurality of third protrusions 3797, and the plurality of third protrusions 3797 are spaced from each other around a circumferential side of the first synchronous gear 91. The second synchronous gear 92 is provided with a plurality of fourth protrusions 3798, and the plurality of fourth protrusions 3798 are spaced from each other around a circumferential side of the second synchronous gear 92. The first synchronous gear 91 and the second synchronous gear 92 are engaged with each other.

For example, the first synchronous gear 91 further includes a first connecting shaft 911, and the second synchronous gear 92 further includes a second connecting shaft 921.

For example, a plurality of first protruding blocks 3737 are disposed on a side that is of the first synchronous gear 91 and that is away from the base 3730, and the plurality of first protruding blocks 3737 are spaced from each other around the first connecting shaft 911 of the first synchronous gear 91, and are fastened to a same side of the first synchronous gear 91. A plurality of second protruding blocks 3738 are disposed on a side that is of the second synchronous gear 92 and that is away from the base 3730, and the plurality of second protruding blocks 3738 are spaced from each other around the second connecting shaft 921 of the second synchronous gear 92, and are fastened to a same side of the second synchronous gear 92.

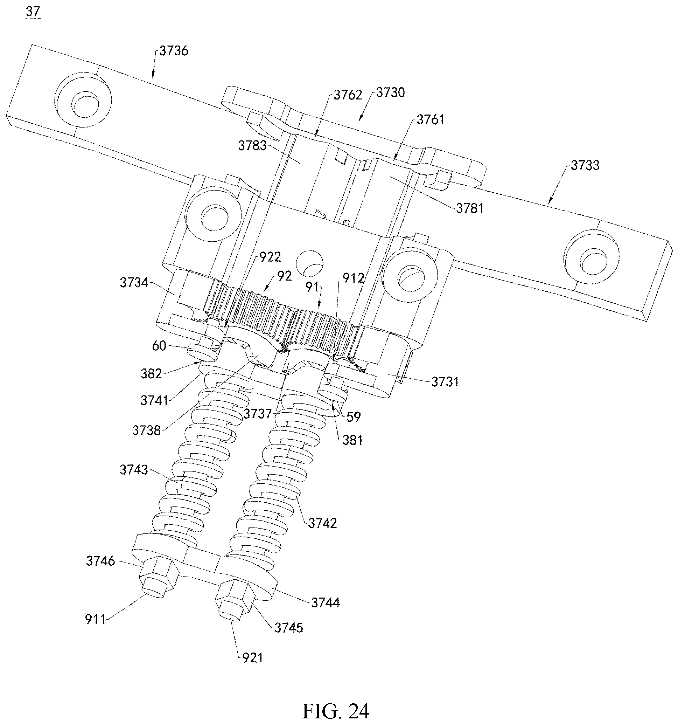

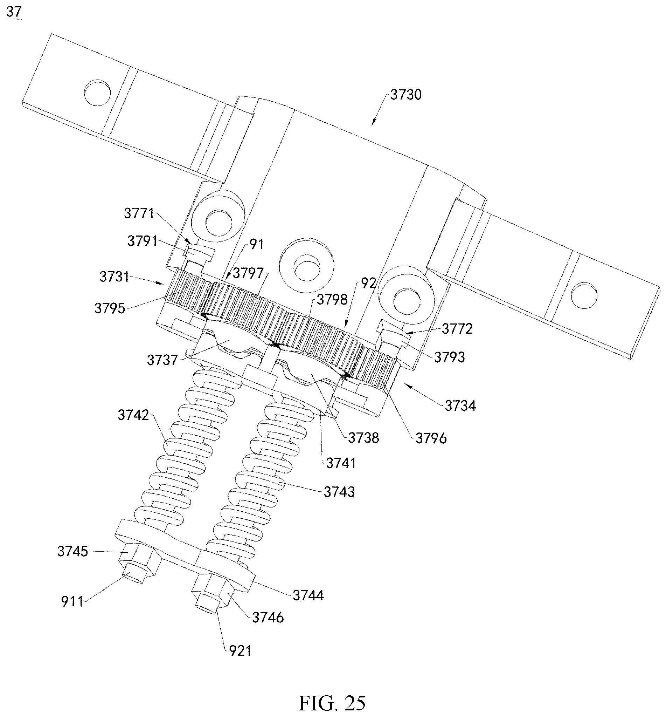

Refer to FIG. 24 and FIG. 25. FIG. 24 is a diagram of a structure of the first connecting assembly 37 shown in FIG. 22. FIG. 25 is a diagram of a structure of the first connecting assembly 37 shown in FIG. 24 from another perspective. An angle of view in FIG. 25 is reversed leftward and rightward relative to an angle of view in FIG. 24.

The first arc-shaped arm 3781 of the third connecting rod 3733 is slidably mounted on the first arc-shaped groove 3761 of the base 3730. The second arc-shaped arm 3783 of the sixth connecting rod 3736 is slidably mounted on the second arc-shaped groove 3762 of the base 3730.

As shown in FIG. 25, the first rotating end 3791 of the first connecting rod 3731 slides into the base 3730 from an opening of the first mounting groove 3771. The second rotating end 3793 of the fourth connecting rod 3734 slides into the base 3730 from an opening of the second mounting groove 3772. For example, the limiting flange of the first rotating end 3791 of the first connecting rod 3731 may be clamped into the first mounting groove 3771, to prevent the first rotating end 3791 of the first connecting rod 3731 from falling off from the first mounting groove 3771. The limiting flange of the second rotating end 3793 of the fourth connecting rod 3734 may be clamped into the second mounting groove 3772, to prevent the second rotating end 3793 of the fourth connecting rod 3734 from falling off from the second mounting groove 3772.

The first synchronous gear 91 and the second synchronous gear 92 are rotatably connected to the base 3730. The first synchronous gear 91 and the second synchronous gear 92 are connected between the first connecting rod 3731 and the fourth connecting rod 3734. A plurality of third protrusions 3797 of the first synchronous gear 91 are engaged with a plurality of first protrusions 3795 of the first connecting rod 3731, and a plurality of fourth protrusions 3798 of the second synchronous gear 92 are engaged with a plurality of second protrusions 3796 of the fourth connecting rod 3734. The first connecting rod 3731 and the fourth connecting rod 3734 synchronously move through the first synchronous gear 91 and the second synchronous gear 92.

The first connecting shaft 911 of the first synchronous gear 91 passes through the clamping member 3741, the first elastic piece 3742, the fastening member 3744, and the first fastener 3745, that is, the first connecting shaft 911 is sequentially connected to the first connecting rod 3731, the first elastic piece 3742, and the first fastener 3745. The first fastener 3745 is fastened to the first connecting shaft 911, and is configured to adjust a mounting deformation amount of the first elastic piece 3742. The second connecting shaft 921 of the second synchronous gear 92 passes through the clamping member 3741, the second elastic piece 3743, the fastening member 3744, and the second fastener 3746, that is, the second connecting shaft 921 is sequentially connected to the fourth connecting rod 3734, the second elastic piece 3743, and the second fastener 3746. The second fastener 3746 is fastened to the second connecting shaft 921, and is configured to adjust a mounting deformation amount of the second elastic piece 3743.

For example, the clamping member 3741, the first elastic piece 3742, the second elastic piece 3743, the fastening member 3744, the first fastener 3745, and the second fastener 3746 may form the damping assembly 374 of the foldable assembly 3. The clamping member 3741, the plurality of first protruding blocks 3737 of the first synchronous gear 91, and the plurality of second protruding blocks 3738 of the second synchronous gear 92 form a plurality of clamping structures. For a clamping structure, refer to the plurality of clamping structures formed by the clamping member 3741, the plurality of first protruding blocks 3737 of the first connecting rod 3731, and the plurality of second protruding blocks 3738 of the fourth connecting rod 3734 shown in FIG. 16.

For a structure of each component of the damping assembly 374 and a connection structure between each component of the damping assembly 374 and both the first connecting shaft 911 of the first synchronous gear 91 and the second connecting shaft 921 of the second synchronous gear 92, refer to the structure of each component of the damping assembly 374 shown in FIG. 16 and FIG. 17, and a connection structure between each component of the damping assembly 374 and both the first rotatable connecting shaft 371 and the second rotatable connecting shaft 372. Details are not described herein again.

For example, the foldable assembly 3 may further include a middle synchronous gear (not shown in the figure), where the middle synchronous gear is connected to two synchronous gears that are of the first synchronous gear and that are meshed with each other, and the synchronous gear may be an integrally formed mechanical part, to have high structural strength. Structures of the plurality of synchronous gears (91, 92, and the intermediate synchronous gear) may be the same, and are made of a same material, so that material types of the foldable assembly 3 are reduced, and costs of the foldable assembly 3 are reduced. In some other embodiments, structures of the plurality of synchronous gears may alternatively be different. This is not strictly limited in this application.

Refer to FIG. 22 and FIG. 24. For example, the first synchronous gear 91 may be provided with third avoidance space 912 for avoiding a ninth pin shaft 59 and a partial structure in which the first connecting rod 3731 is connected to the ninth pin shaft 59, so that the first connecting rod 3731 and the first synchronous gear 91 are spatially multiplexed. The second synchronous gear 92 may be provided with fourth avoidance space 922 for avoiding the tenth pin shaft 60 and a partial structure in which the fourth connecting rod 3734 is connected to the tenth pin shaft 60, so that the fourth connecting rod 3734 and the second synchronous gear 92 are spatially multiplexed Therefore, the foldable assembly 3 in this embodiment of this application has a compact structure and occupies small space, so that more available space can be reserved for another component in the electronic device 1000.

For example, the clamping member 3741 may be provided with fifth avoidance space 381 and sixth avoidance space 382. The fifth avoidance space 381 is used to avoid the ninth pin shaft 59 and a partial structure in which the first connecting rod 3731 is connected to the ninth pin shaft 59. The sixth avoidance space 382 is used to avoid the tenth pin shaft 60 and a partial structure in which the fourth connecting rod 3734 is connected to the tenth pin shaft 60, so that the first connecting rod 3731 and the fourth connecting rod 3734 are spatially multiplexed with the clamping member 3741. Therefore, the foldable assembly 3 in this embodiment of this application has a compact structure and occupies small space, so that more available space can be reserved for another component in the electronic device 1000.

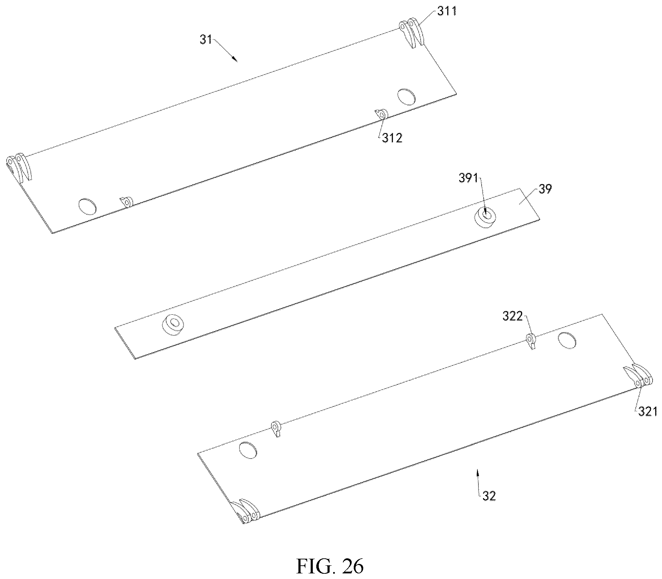

FIG. 26 is a diagram of a partial structure of the foldable assembly 3 shown in FIG. 21 from another perspective. FIG. 26 shows structures of the first support member 31, the second support member 32, and the third support member 39 of the foldable assembly 3. A view angle in FIG. 26 is reversed leftward and rightward relative to a view angle in FIG. 21.

For example, a first rotatable connector 311 and a second rotatable connector 312 may be disposed on a bottom surface of the first support member 31, the first rotatable connector 311 is located at an end part of the first support member 31, and the second rotatable connector 312 is located on a middle part of the first support member 31. The first rotatable connector 311 may include two connecting plates that are spaced from each other, where the two connecting plates are respectively provided with through holes, and the through holes of the two connecting plates are provided opposite to each other. The second rotatable connector 312 may include a connecting plate, and the connecting plate is provided with a through hole. In some other embodiments, the first rotatable connector 311 may alternatively include one, three, or another quantity of connecting plates that are spaced from each other, each connecting plate is provided with through holes, and the through holes of connecting plates are provided opposite to each other. The second rotatable connector 312 may include two, three, or another quantity of connecting plates that are spaced from each other, each connecting plate is provided with through holes, and the through holes of each connecting plate are provided opposite to each other.

For example, a third rotatable connector 321 and a fourth rotatable connector 322 may be disposed on a bottom surface of the second support member 32, the third rotatable connector 321 is located at an end part of the second support member 32, and the fourth rotatable connector 322 is located on a middle part of the second support member 32. The third rotatable connector 321 may include two connecting plates that are spaced from each other, where the two connecting plates are respectively provided with through holes, and the through holes of the two connecting plates are provided opposite to each other. The fourth rotatable connector 322 may include a connecting plate, and the connecting plate is provided with a through hole.

For example, the third support member 39 may be provided with a plurality of first fastening holes 391. The plurality of first fastening holes 391 are configured to allow a fastener (not shown in the figure) to pass through. Some of the first fastening holes 391 of the third support member 39 may be aligned with the second fastening holes 392 of the base 3730 of the first connecting assembly 37 (refer to FIG. 22), and the fastener extends into the second fastening hole 392 of the base 3730 and the first fastening hole 391 of the third support member 39, to lock the third support member 39 and the base 3730 of the first connecting assembly 37.

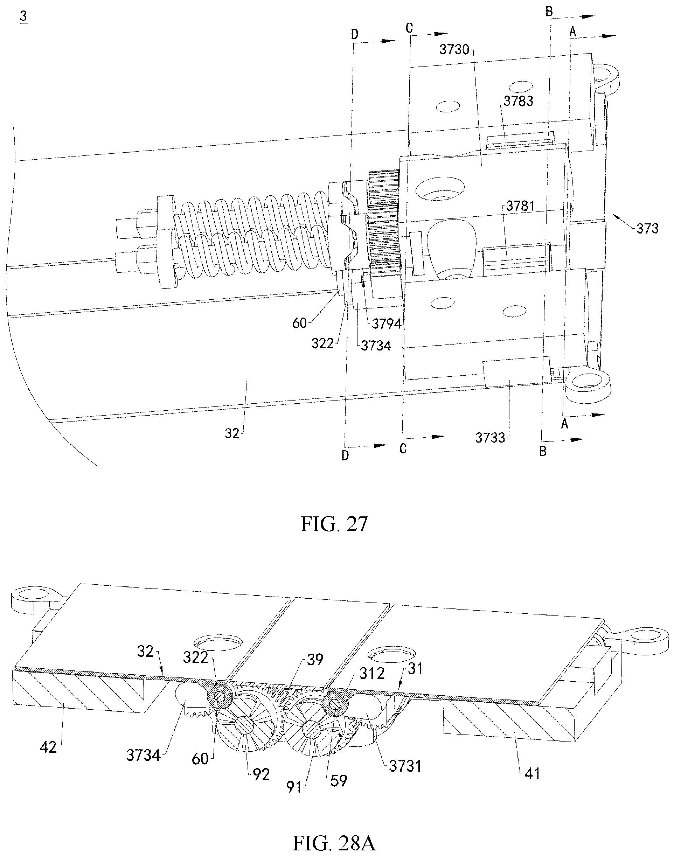

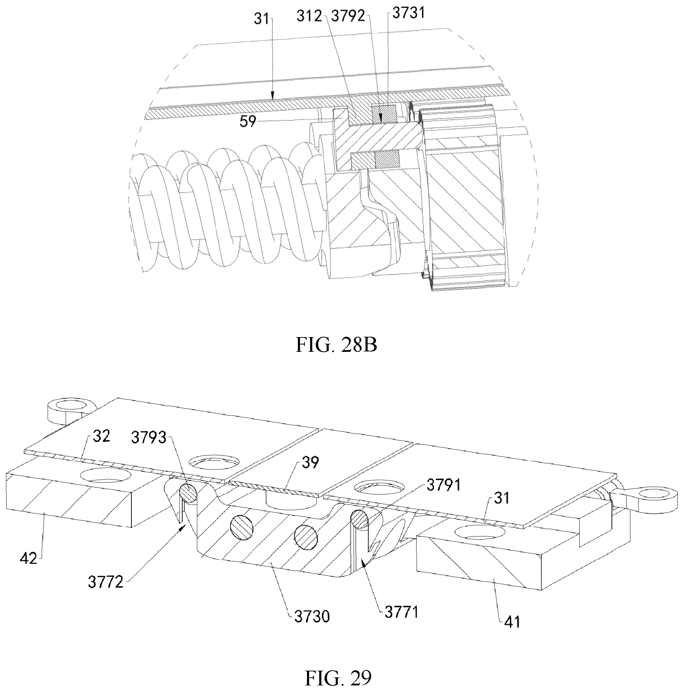

Refer to FIG. 27, FIG. 28A, FIG. 28B, and FIG. 29. FIG. 27 is a diagram of a structure of the foldable assembly 3 shown in FIG. 19 from another perspective. FIG. 28A is a diagram of an internal structure of the foldable assembly 3 that is shown in FIG. 19 and that is cut along A-A. FIG. 28B is a diagram of a partial internal structure of the foldable assembly 3 shown in FIG. 19. FIG. 29 is a diagram of an internal structure of the foldable assembly 3 that is shown in FIG. 19 and that is cut along B-B. An angle of view in FIG. 27 is reversed leftward and rightward relative to the angle of view in FIG. 19. A-A in FIG. 19 and A-A in FIG. 27 are located on a same position, and a section that is cut along A-A passes through the second connector 42, the second support member 32, the tenth pin shaft 60, the second synchronous gear 92, the third support member 39, the first synchronous gear 91, the ninth pin shaft 59, the first support member 31, and the first connector 41. B-B in FIG. 19 and B-B in FIG. 27 are located on a same position, and a section that is cut along B-B passes through the second connector 42, the second support member 32, the second rotating end 3793 of the fourth connecting rod 3734, the base 3730, the third support member 39, the first rotating end 3791 of the first connecting rod 3731, the first support member 31, and the first connector 41. FIG. 28B shows a connection relationship between the ninth pin shaft 59 and both the first mounting hole 3792 of the first connecting rod 3731 and a through hole of the second rotatable connector 312 of the first support member 31.

As shown in FIG. 27, FIG. 28A, and FIG. 28B, the ninth pin shaft 59 passes through the first mounting hole 3792 of the first connecting rod 3731 and the through hole of the second rotatable connector 312 of the first support member 31, so that the first connecting rod 3731 is rotatably connected to the first support member 31. As shown in FIG. 27 and FIG. 28A, the tenth pin shaft 60 passes through the second mounting hole 3794 of the fourth connecting rod 3734 and a through hole of the fourth rotatable connector 322 of the second support member 32, so that the fourth connecting rod 3734 is rotatably connected to the second support member 32. It should be noted that, although the case in which the tenth pin shaft 60 passes through the second mounting hole 3794 of the fourth connecting rod 3734 and the through hole of the fourth rotatable connector 322 of the second support member 32 is not shown in the accompanying drawings, design may be performed with reference to the structure in FIG. 28B.

As shown in FIG. 27 and FIG. 29, the first rotating end 3791 of the first connecting rod 3731 is mounted in the first mounting groove 3771 of the base 3730, so that the first connecting rod 3731 is rotatably connected to the base 3730. The second rotating end 3793 of the fourth connecting rod 3734 is mounted on the second mounting groove 3772 of the base 3730, so that the fourth connecting rod 3734 is rotatably connected to the base 3730.

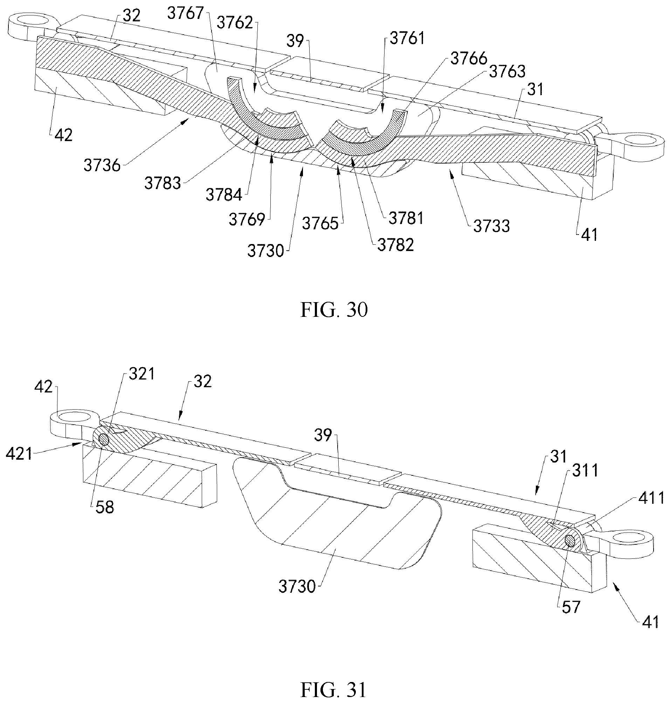

Refer to FIG. 27, FIG. 30, and FIG. 31. FIG. 30 is a diagram of an internal structure of the foldable assembly 3 that is shown in FIG. 19 and that is cut along C-C. FIG. 31 is a diagram of an internal structure of the foldable assembly 3 that is shown in FIG. 19 and that is cut along D-D. C-C in FIG. 19 and C-C in FIG. 27 are located on a same position, and a section that is cut along C-C passes through the second connector 42, the second support member 32, the sixth connecting rod 3736, the base 3730, the third support member 39, the third connecting rod 3733, the first support member 31, and the first connector 41. D-D in FIG. 19 and D-D in FIG. 27 are located on a same position, and a section that is cut along D-D passes through the second connector 42, the second support member 32, the base 3730, the third support member 39, the first support member 31, and the first connector 41.

As shown in FIG. 27 and FIG. 30, the first arc-shaped arm 3781 of the third connecting rod 3733 is mounted on the first arc-shaped groove 3761 of the base 3730. The first arc-shaped arm 3781 of the third connecting rod 3733 is attached to the third groove wall 3765 of the base 3730, and slides along a radian of the third groove wall 3765, so that the third connecting rod 3733 rotates relative to the base 3730. In addition, the first limiting slot 3782 of the first arc-shaped arm 3781 of the third connecting rod 3733 fits the arc-shaped limiting member 3766 of the first groove wall 3763 and the second groove wall 3764 (not shown in the figure). The first limiting slot 3782 of the first arc-shaped arm 3781 of the third connecting rod 3733 may slide relative to the arc-shaped limiting member 3766 of the first groove wall 3763 and the second groove wall 3764. The arc-shaped limiting member 3766 can limit a motion trajectory of the first limiting slot 3782 of the first arc-shaped arm 3781 of the third connecting rod 3733, and further limit a motion trajectory of the third connecting rod 3733 relative to the base 3730.

The second arc-shaped arm 3783 of the sixth connecting rod 3736 is mounted on the second arc-shaped groove 3762 of the base 3730. The second arc-shaped arm 3783 of the sixth connecting rod 3736 is attached to the sixth groove wall 3769 of the base 3730, and slides along a radian of the sixth groove wall 3769, so that the sixth connecting rod 3736 rotates relative to the base 3730. In addition, the second limiting slot 3784 of the second arc-shaped arm 3783 of the sixth connecting rod 3736 fits the arc-shaped limiting member 3766 of the fourth groove wall 3767 and the fifth groove wall 3768 (not shown in the figure). The second limiting slot 3784 of the second arc-shaped arm 3783 of the sixth connecting rod 3736 may slide relative to the arc-shaped limiting member 3766 of the fourth groove wall 3767 and the fifth groove wall 3768. The arc-shaped limiting member 3766 can limit a motion trajectory of the second limiting slot 3784 of the second arc-shaped arm 3783 of the sixth connecting rod 3736, and further limit a motion trajectory of the sixth connecting rod 3736 relative to the base 3730.

As shown in FIG. 27 and FIG. 31, the seventh pin shaft 57 passes through a through hole of the fifth rotatable connector 411 of the first connector 41 and a through hole of the first rotatable connector 311 of the first support member 31, so that the first connector 41 is rotatably connected to the first support member 31. In addition, as shown in FIG. 30, the third connecting rod 3733 is fastened to the first connector 41. Therefore, the third connecting rod 3733 is rotatably connected to the first support member 31.

The eighth pin shaft 58 passes through a through hole of the sixth rotatable connector 421 of the second connector 42 and a through hole of the third rotatable connector 321 of the second support member 32, so that the second connector 42 is rotatably connected to the second support member 32. In addition, as shown in FIG. 30, the sixth connecting rod 3736 is fastened to the second connector 42. Therefore, the sixth connecting rod 3736 is rotatably connected to the second support member 32.

In this embodiment of this application, refer to FIG. 28A and FIG. 29. One end of the first connecting rod 3731 is rotatably connected to the first mounting groove 3771 of the base 3730, and the other end of the first connecting rod 3731 is rotatably connected to the second rotatable connector 312 of the first support member 31. Refer to FIG. 30 and FIG. 31. One end of the third connecting rod 3733 is rotatably to the first arc-shaped groove 3761 of the base 3730, the other end of the third connecting rod 3733 is rotatably connected to the first rotatable connector 311 of the first support member 31, there is a spacing between the first mounting groove 3771 3730 and the first arc-shaped groove 3761 that are of the base, and there is a spacing between the first rotatable connector 311 and the second rotatable connector 312 that are of the first support member 31. That is, one end of the first connecting rod 3731 is rotatably connected to a first position of the base 3730, the other end of the first connecting rod 3731 is rotatably connected to a first position of the first support member 31, one end of the third connecting rod 3733 is rotatably connected to a second position of the base 3730, and the other end of the third connecting rod 3733 is rotatably connected to a second position of the first support member 31, where there is a spacing between the first position and the second position that are of the base 3730, and there is a spacing between the first position and the second position that are of the first support member 31. Therefore, the first connecting rod 3731, the first support member 31, the third connecting rod 3733, and the base 3730 form a first four-bar linkage.

Refer to FIG. 28A and FIG. 29. One end of the fourth connecting rod 3734 is rotatably connected to the second mounting groove 3772 of the base 3730, and the other end of the fourth connecting rod 3734 is rotatably connected to the fourth rotatable connector 322 of the second support member 32. Refer to FIG. 30 and FIG. 31. One end of the sixth connecting rod 3736 is rotatably connected to the second arc-shaped groove 3762 of the base 3730, and the other end of the sixth connecting rod 3736 is rotatably connected to the third rotatable connector 321 of the second support member 32, where there is a spacing between the second mounting groove 3772 and the second arc-shaped groove 3762 that are of the base 3730, and there is a spacing between the third rotatable connector 321 and the fourth rotatable connector 322 that are of the second support member 32. That is, one end of the fourth connecting rod 3734 is rotatably connected to a third position of the base 3730, the other end of the fourth connecting rod 3734 is rotatably connected to a third position of the second support member 32, one end of the sixth connecting rod 3736 is rotatably connected to a fourth position of the base 3730, and the other end of the sixth connecting rod 3736 is rotatably connected to a fourth position of the second support member 32, where there is a spacing between the third position and the fourth position that are of the base 3730, and there is a spacing between the third position and the fourth position that are of the second support member 32. Therefore, the fourth connecting rod 3734, the second support member 32, the sixth connecting rod 3736, and the base 3730 form a second four-bar linkage.

Therefore, in this embodiment, the first support member 31, the second support member 32, the second pin shaft 52, the first connector 41, the second connector 42, the base 3730, the first connecting rod 3731, the third connecting rod 3733, the fourth connecting rod 3734, and the sixth connecting rod 3736 form two four-bar linkages of the connecting rod assembly 373.

In this embodiment of this application, the two four-bar linkages of the connecting rod assembly 373 can deform, so that the electronic device 1000 can be unfolded or folded. The four-bar linkage is simple in structure, has a few constituent components, and low manufacturing costs. In addition, in a deformation process of the four-bar linkage, the connecting rods of the four-bar linkage restrict each other, so that the four-bar linkage has a determined motion trajectory, and a motion trajectory of the electronic device 1000 can be accurately controlled. In this embodiment of this application, the electronic device 1000 is unfolded or folded through the connecting rod assembly 373, so that manufacturing costs of the electronic device 1000 can be reduced while precise motion of the electronic device 1000 is ensured.

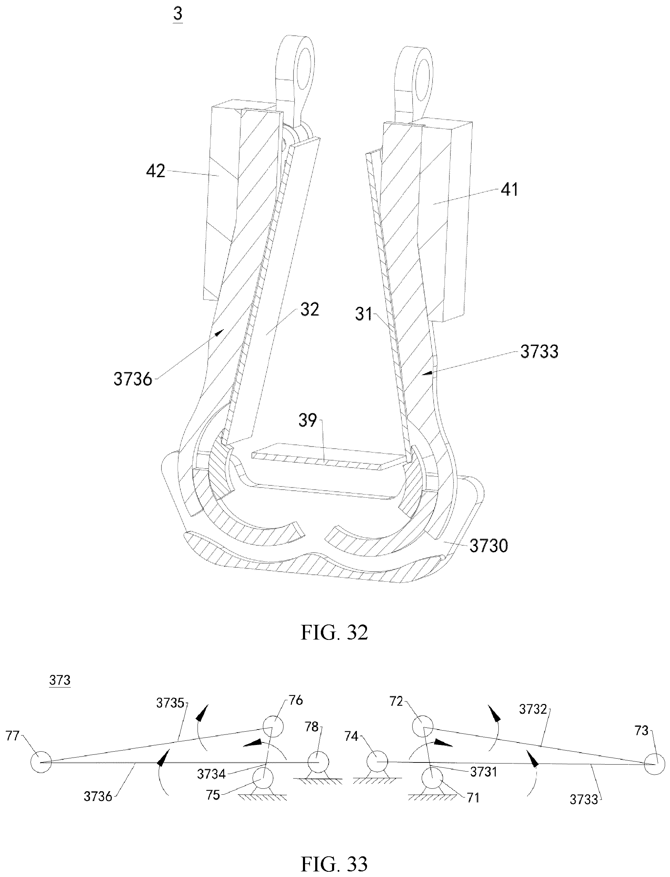

Refer to FIG. 30 and FIG. 32. FIG. 32 is a diagram of an internal structure of the foldable assembly 3 shown in FIG. 30 that is folded.

When the electronic device 1000 is unfolded, the first support member 31 and the second support member 32 are located on two sides of the base 3730. The third connecting rod 3733 and the sixth connecting rod 3736 are located on the two sides of the base 3730. When the electronic device 1000 is folded, the first support member 31 and the second support member 32 are located on a same side of the base 3730. The third connecting rod 3733 and the sixth connecting rod 3736 are located on the same side of the base 3730.

Refer to FIG. 30, FIG. 32, and FIG. 33. FIG. 33 is a diagram of a motion process of the connecting rod assembly 373 shown in FIG. 27 in some embodiments.

In this embodiment, one end of the first connecting rod 3731 is rotatably connected to the base 3730, and the other end of the first connecting rod 3731 is rotatably connected to the first support member 31; and one end of the third connecting rod 3733 is rotatably connected to the base 3730, and the other end of the third connecting rod 3733 is rotatably connected to the first support member 31. The first support member 31 is equivalent to the second connecting rod 3732 shown in FIG. 12. In some other embodiments, the foldable assembly 3 may also include the second connecting rod 3732. The second connecting rod 3732 has the first rotatable connector 311 and the second rotatable connector 312, and there is a spacing between the first rotatable connector 311 of the second connecting rod 3732 and the second rotatable connector 312 of the second connecting rod 3732. The second connecting rod 3732 is fastened to the first support member 31, and the first support member 31 moves with the second connecting rod 3732. That is, the first connecting rod 3731, the second connecting rod 3732, the third connecting rod 3733, and the base 3730 form a first four-bar linkage.

One end of the fourth connecting rod 3734 is rotatably connected to the base 3730, and the other end of the fourth connecting rod 3734 is rotatably connected to the second support member 32; and one end of the sixth connecting rod 3736 is rotatably connected to the base 3730, and the other end of the sixth connecting rod 3736 is rotatably connected to the second support member 32. The second support member 32 is equivalent to the fifth connecting rod 3735 shown in FIG. 12. **In** some other embodiments, the foldable assembly 3 may also include the fifth connecting rod 3735. The fifth connecting rod 3735 has the third rotatable connector 321 and the fourth rotatable connector 322, and there is a spacing between the third rotatable connector 321 of the fifth connecting rod 3735 and the fourth rotatable connector 322 of the fifth connecting rod 3735. The fifth connecting rod 3735 is fastened to the second support member 32, and the second support member 32 moves with the fifth connecting rod 3735. That is, the fourth connecting rod 3734, the fifth connecting rod 3735, the sixth connecting rod 3736, and the base 3730 form a second four-bar linkage.

**In** this embodiment of this application, each connecting rod of the connecting rod assembly 373 can move, so that the electronic device 1000 is unfolded or folded. Specifically, in a process from unfolding to folding of the electronic device 1000, the first connecting rod 3731 rotates clockwise relative to the base 3730, and the second connecting rod 3732 and the third connecting rod 3733 rotate anticlockwise; and the fourth connecting rod 3734 rotates anticlockwise relative to the base 3730, and the fifth connecting rod 3735 and the sixth connecting rod 3736 rotate clockwise. The second connecting rod 3732 and the fifth connecting rod 3735 move toward each other, and the third connecting rod 3733 and the sixth connecting rod 3736 move toward each other, to fold from the two sides of the base 3730 to a same side of the base 3730.

Correspondingly, in a process from folding to unfolding of the electronic device 1000, the first connecting rod 3731 rotates anticlockwise relative to the base 3730, and the second connecting rod 3732 and the third connecting rod 3733 rotate clockwise; and the fourth connecting rod 3734 rotates clockwise relative to the base 3730, and the fifth connecting rod 3735 and the sixth connecting rod 3736 rotate anticlockwise. The second connecting rod 3732 and the fifth connecting rod 3735 move toward each other, and the third connecting rod 3733 and the sixth connecting rod 3736 move toward each other, to unfold relative to each other from a same side of the base 3730 to the two sides of the base 3730.

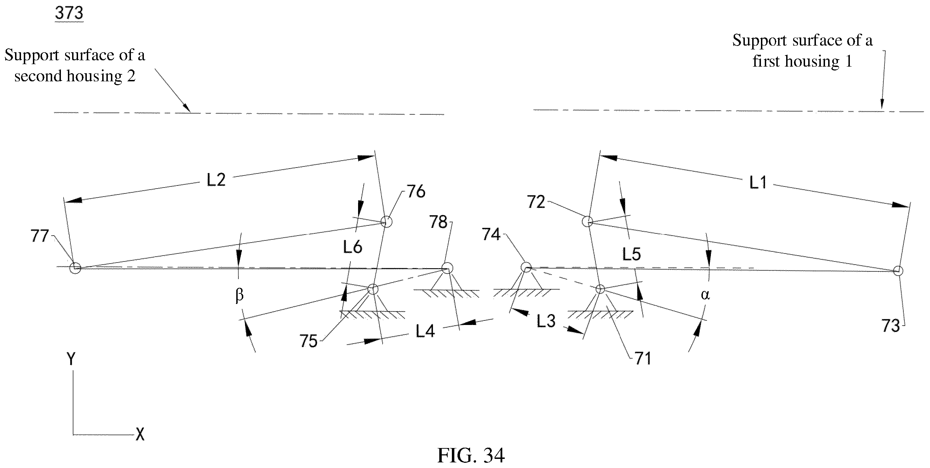

Refer to FIG. 33 and FIG. 34. FIG. 34 is a diagram of a position relationship between connecting rods of the connecting rod assembly 373 shown in FIG. 27.

The first connecting rod 3731 rotates around a first rotation center 71 relative to the base 3730, the first connecting rod 3731 rotates around a second rotation center 72 relative to the second connecting rod 3732, the second connecting rod 3732 rotates around a third rotation center 73 relative to the third connecting rod 3733, and the third connecting rod 3733 rotates around a fourth rotation center 74 relative to the base 3730.

The fourth connecting rod 3734 rotates around a fifth rotation center 75 relative to the base 3730, the fourth connecting rod 3734 rotates around a sixth rotation center 76 relative to the fifth connecting rod 3735, the fifth connecting rod 3735 rotates around a seventh rotation center 77 relative to the sixth connecting rod 3736, and the sixth connecting rod 3736 rotates around an eighth rotation center 78 relative to the base 3730.

The third rotation center 73 is located on a right side of the second rotation center 72, namely, a side away from the second body part 2, and the seventh rotation center is located on a left side of the sixth rotation center, namely, a side away from the first body part 1.

The fourth rotation center 74 may be located on a left side of the first rotation center 71, and the eighth rotation center 78 may be located on a right side of the fifth rotation center 75.

For example, a distance L1 between the second rotation center 72 and the third rotation center 73 may meet: L1≤20 millimeters, or 1 millimeter≤L1≤20 millimeters, for example, L1 may be 3 millimeters, 7 millimeters, or 12 millimeters; and a distance L2 between the sixth rotation center and the seventh rotation center may meet: L2≤20 millimeters, or 1 millimeter≤L2≤20 millimeters, for example, L2 may be 3 millimeters, 7 millimeters, or 12 millimeters.

In this embodiment, there is a large distance between the second rotation center 72 and the third rotation center 73, to avoid interference between the first connecting rod 3731 and the third connecting rod 3733 in a motion process; and there may be a large spacing between the sixth rotation center and the seventh rotation center, to avoid interference between the fourth connecting rod 3734 and the sixth connecting rod 3736 in the motion process.

The fourth rotation center 74 is located on a right side of the first rotation center 71, namely, a side away from the second body part 2, and the eighth rotation center 78 is located on a left side of the fifth rotation center 75, namely, a side away from the first body part 1. In some other embodiments, the fourth rotation center 74 may be also located on the left side of the first rotation center 71, namely, a side away from the first body part 1, and the eighth rotation center 78 may alternatively be located on the right side of the fifth rotation center 75, namely, a side away from the second body part 2.

For example, a distance L3 between the first rotation center 71 and the fourth rotation center 74 may meet: L3≤5 millimeters, or 2 millimeters≤L3≤5 millimeters, for example, L3 may be 2 millimeters, 2.5 millimeters, or 4 millimeters; and a distance L4 between the fifth rotation center 75 and the eighth rotation center 78 may meet: L4≤5 millimeters, or 2 millimeters≤L4≤5 millimeters, for example, L4 may be 2 millimeters, 2.5 millimeters, or 4 millimeters.

In this embodiment, the distance between the first rotation center 71 and the fourth rotation center 74 is small, and the distance between the fifth rotation center 75 and the eighth rotation center 78 is small, to reduce a width of the connecting rod assembly 373, reduce a width of the foldable assembly 3, and avoid occupying large space and squeezing available space of another component in the electronic device 1000. In this embodiment of this application, a width of a component is a size of the component in a first direction X, and the first direction X is parallel to a plane on which the screen 200 is located and is perpendicular to the axial direction (refer to FIG. 1).

For example, there is a first included angle α between a connection line between the first rotation center 71 and the fourth rotation center 74 and a plane parallel to a first support surface of the first body part 1, and there is a second included angle β between a connection line between the fifth rotation center 75 and the eighth rotation center 78 and a plane parallel to a second support surface of the second body part 2. As shown in FIG. 12, both projection of the first support surface of the first body part 1 and projection of the second support surface of the second body part 2 are straight lines parallel to the first direction X. The first included angle α is an included angle between the connection line between the first rotation center 71 and the fourth rotation center 74 and the first direction X, and the second included angle β is an included angle between the connection line between the fifth rotation center 75 and the eighth rotation center 78 and the first direction X.

In this embodiment, a specific distance needs to be provided between the first rotation center 71 and the fourth rotation center 74, to meet a structural requirement of a connecting rod piece required by motion of the bar linkage. If there is the first included angle α between the connection line between the first rotation center 71 and the fourth rotation center 74 and the plane parallel to the first support surface of the first body part 1, the fourth rotation center 74 is located on a side that is of the first rotation center 71 and that is close to the screen 200, to reduce a distance between the fourth rotation center 74 and the first rotation center 71 in the first direction X, thereby further reducing a width of the connecting rod assembly 373, and further reducing a width of the foldable assembly 3. In this way, more available space is reserved for another component in the electronic device 1000.

In addition, a specific distance needs to be provided between the fifth rotation center 75 and the eighth rotation center 78, to meet a structural requirement of a connecting rod piece required by motion of the bar linkage. If there is the second included angle β between the connection line between the fifth rotation center 75 and the eighth rotation center 78 and the plane parallel to the second support surface of the second body part 2, the eighth rotation center 78 is located on a side that is of the fifth rotation center 75 and that is close to the screen 200, to reduce a distance between the eighth rotation center 78 and the fifth rotation center 75 in the first direction X, thereby further reducing a width of the connecting rod assembly 373, and further reducing a width of the foldable assembly 3. In this way, more available space is reserved for another component in the electronic device 1000.

For example, the first included angle α may meet: The first included angle α≤25°, or 5°≤the first included angle α≤25°, for example, 7°, 10°, or 13°. The second included angle β may meet: The second included angle β≤25°, or 5°≤the second included angle β≤25°, for example, 7°, 10°, or 13°.

In this embodiment, the first included angle α is small, so that the distance between the fourth rotation center 74 and the first rotation center 71 in the second direction Y is small; and the second included angle β is small, so that the distance between the eighth rotation center 78 and the fifth rotation center 75 in the second direction Y is small, and a thickness of the foldable assembly 3 is small. In this embodiment of this application, the second direction Y is perpendicular to the screen 200. A thickness of a component is a size of the component in the second direction Y. Therefore, the electronic device 1000 provided in embodiments of this application is small in thickness, and can meet requirements for miniaturization, lightness and thinness.

For example, the first included angle α may be equal to the second included angle β, or may be unequal to the second included angle β. This is not limited in this application.

For example, a distance L5 between the first rotation center 71 and the second rotation center 72 may meet: L5≤4 millimeters, or 1 millimeter≤L5≤4 millimeters, for example, L5 may be 1 millimeter, 2.5 millimeters, or 4 millimeters; and a distance L6 between the fifth rotation center 75 and the sixth rotation center may meet: L6≤4 millimeters, or 1 millimeter≤L6≤4 millimeters, for example, L6 may be 1 millimeter, 2.5 millimeters, or 4 millimeters.

As shown in FIG. 11, when the electronic device 1000 is unfolded, both the first connecting rod 3731 and the fifth connecting rod 3735 are approximately parallel to the second direction Y. Sizes of the first connecting rod 3731 and the fifth connecting rod 3735 affect a thickness of the foldable assembly 3. Smaller sizes of the first connecting rod 3731 and the fifth connecting rod 3735 indicate a smaller thickness of the foldable assembly 3. In this embodiment, the distance between the first rotation center 71 and the second rotation center 72 is small, and the distance between the fifth rotation center 75 and the sixth rotation center is small, that is, a size of the first connecting rod 3731 is small, and a size of the fifth connecting rod 3735 is small, so that the thickness of the foldable assembly 3 is small, the thickness of the electronic device 1000 is reduced, and requirements for miniaturization, lightness and thinness are met.

Refer to FIG. 33 and FIG. 34. For example, the third rotation center 73 is located on a side that is of a connection line between the second rotation center 72 and the fourth rotation center 74 and that is away from the base 3730. The seventh rotation center 77 is located on a side that is of a connection line between the sixth rotation center 76 and the eighth rotation center 78 and that is away from the base 3730.

In this embodiment, in the motion process of each connecting rod of the connecting rod assembly 373, the second connecting rod 3732 and the third connecting rod 3733 rotate in opposite directions, and the fifth connecting rod 3735 and the sixth connecting rod 3736 rotate in opposite directions. The third rotation center 73 is located on a side that is of a connection line between the second rotation center 72 and the fourth rotation center 74 and that is away from the base 3730, to avoid a case in which the second rotation center 72, the third rotation center 73, and the fourth rotation center 74 are located on a same straight line. In this way, the second connecting rod 3732 and the third connecting rod 3733 are prevented from being blocked in a process of rotating toward each other. The seventh rotation center 77 is located on a side that is of a connection line between the sixth rotation center 76 and the eighth rotation center 78 and that is away from the base 3730, to avoid a case in which the sixth rotation center 76, the seventh rotation center 77, and the eighth rotation center 78 are located on a same straight line. In this way, the fifth connecting rod 3735 and the sixth connecting rod 3736 are prevented from being blocked in a process of rotating toward each other.

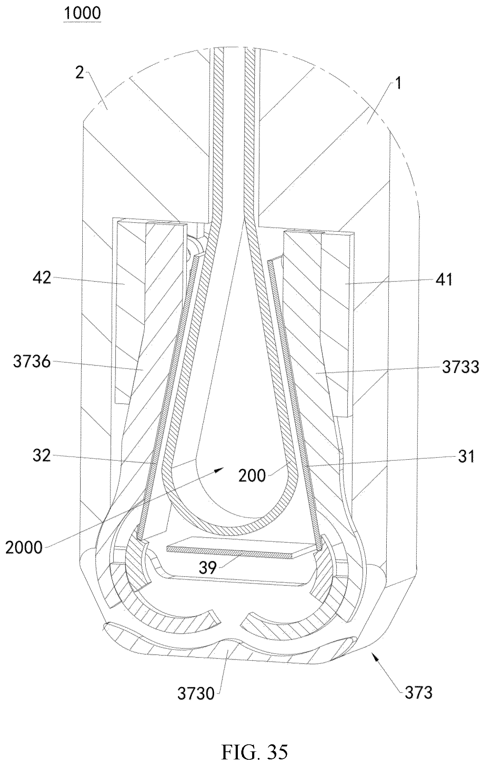

Refer to FIG. 30 and FIG. 35. FIG. 35 is a diagram of an internal structure of the electronic device 1000 shown in FIG. 2 that is folded in some other embodiments.

The first body part 1 is fastened to the first connector 41, and is fastened to the third connecting rod 3733 of the connecting rod assembly 373 of the first connecting assembly 37 through the first connector 41; and the second body part 2 is fastened to the second connector 42, and is fastened to the sixth connecting rod 3736 of the connecting rod assembly 373 of the first connecting assembly 37 through the second connector 42. Each connecting rod of the connecting rod assembly 373 can move, so that the third connecting rod 3733 and the sixth connecting rod 3736 are unfolded or folded relative to each other. Therefore, the first body part 1 and the second body part 2 can be unfolded or folded relative to each other through motion of each connecting rod of the connecting rod assembly 373, namely, deformation of the connecting rod assembly 373, so that the electronic device 1000 is unfolded or folded.

When the electronic device 1000 is unfolded, the first support member 31 and the second support member 32 are located on two sides of the third support member 39, and there is a gap between an end that is of the first support member 31 and that is close to the third support member 39 and an upper surface of the third connecting rod 3733. There is a gap between an end that is of the second support member 32 and that is close to the third support member 39 and an upper surface of the sixth connecting rod 3736. In this embodiment, the base 3730 is located on a lower side of the third support member, the end that is of the first support member 31 and that is close to the third support member 39 is an end that is of the first support member 31 and that is close to the base 3730, and the end that is of the second support member 32 and that is close to the third support member 39 is an end that is of the second support member 32 and that is close to the base 3730.

When the electronic device 1000 is folded, as shown in FIG. 35, the first body part 1 and the second body part 2 are located on a same side of the third support member 39, and the screen 200 is accommodated inside the first body part 1, the foldable assembly 3, and the second body part 2. The first support member 31 and the second support member 32 are located on a same side of the third support member 39. The end that is of the first support member 31 and that is close to the third support member 39 is almost in contact with the upper surface of the third connecting rod 3733, or a distance between the end that is of the first support member 31 and that is close to the third support member 39 and the upper surface of the third connecting rod 3733 decreases. The end that is of the second support member 32 and that is close to the third support member 39 is almost in contact with the upper surface of the sixth connecting rod 3736, or a distance between the end that is of the second support member 32 and that is close to the third support member 39 and the upper surface of the sixth connecting rod 3736 decreases. In addition, in a process from folding to unfolding or from unfolding to folding of the electronic device 1000, the first support member 31 rotates relative to the third connecting rod 3733, and the second support member 32 rotates relative to the sixth connecting rod 3736, so that the distance between the end that is of the first support member 31 and that is close to the third support member 39 and the upper surface of the third connecting rod 3733 decreases, and the distance between the end that is of the second support member 32 and that is close to the third support member 39 and the upper surface of the sixth connecting rod 3736 decreases.

Therefore, a spacing between the first support member 31 and the second support member 32 gradually increases in a direction close to the base 3730, and the first support member 31, the third support member 39, and the second support member 32 form screen accommodating space 2000.

In this embodiment, when the electronic device 1000 is folded, the first body part 1 and the second body part 2 may be approximately aligned to each other. The first support member 31 is inclined to the first body part 1, and the second support member 32 is inclined to the second body part 2, so that the first body part 1, the first support member 31, the third support member 39, the second support member 32, and the second body part 2 jointly form "water-drop-like" screen accommodating space 2000. In this embodiment, when the electronic device 1000 is folded, a part of the screen 200 may be located in the screen accommodating space 2000, to prevent the first support member 31, the third support member 39, and the second support member 32 from squeezing the screen 200, thereby improving reliability of the screen 200. In addition, the spacing between the first body part 1 and the second body part 2 is small, and the first body part 1 and the second body part 2 can support each other, so that structural stability is good.

In this embodiment, the first body part 1 is fastened to the third connecting rod 3733, and the first support member 31 can rotate relative to the third connecting rod 3733, so that the first support member 31 can rotate relative to the first body part 1. The first body part 1 is fastened to the sixth connecting rod 3736, and the second support member 32 can rotate relative to the sixth connecting rod 3736, so that the second support member 32 can rotate relative to the second body part 2. In this way, the first support member 31 can be inclined to the first body part 1, and the second support member 32 can be inclined to the second body part 2, to form the "water-drop-like" screen accommodating space 2000.

In this application, the first body part 1 may be fastened to the second connecting rod 3732 (refer to the structure of the electronic device 1000 shown in FIG. 18) or the third connecting rod 3733 (refer to the structure of the electronic device 1000 shown in FIG. 35), and the second body part 2 may be fastened to the fifth connecting rod 3735 (refer to the structure of the electronic device 1000 shown in FIG. 18) or the sixth connecting rod 3736 (refer to the structure of the electronic device 1000 shown in FIG. 35).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Embodiments of this application and features in embodiments may be mutually combined provided that no conflict occurs. Therefore, the protection scope of this application shall be subject to the protection scope of the claims.

## Claims

1. An electronic device, comprising a first body part, a second body part, and a foldable assembly, wherein the foldable assembly is connected between the first body part and the second body part, and the first body part and the second body part are capable of being unfolded or folded relative to each other via the foldable assembly;
the foldable assembly comprises a first connecting rod, a second connecting rod, a third connecting rod, and a base, wherein the first body part is fastened to the second connecting rod or the third connecting rod, one end of the first connecting rod is rotatably connected to a first position of the base, the other end of the first connecting rod is rotatably connected to a first position of the second connecting rod, one end of the third connecting rod is rotatably connected to a second position of the base, the other end of the third connecting rod is rotatably connected to a second position of the second connecting rod, the first position of the base is different from the second position of the base, and the first position of the second connecting rod is different from the second position of the second connecting rod; and
the foldable assembly further comprises a fourth connecting rod, a fifth connecting rod, and a sixth connecting rod, wherein the second body part is fastened to the fifth connecting rod or the sixth connecting rod, one end of the fourth connecting rod is rotatably connected to a third position of the base, the other end of the fourth connecting rod is rotatably connected to a first position of the fifth connecting rod, one end of the sixth connecting rod is rotatably connected to a fourth position of the base, the other end of the sixth connecting rod is rotatably connected to a second position of the fifth connecting rod, the third position of the base is different from the fourth position of the base, and the first position of the fifth connecting rod is different from the second position of the fifth connecting rod.

2. The electronic device according to claim 1, wherein the first connecting rod rotates around a second rotation center relative to the second connecting rod, the second connecting rod rotates around a third rotation center relative to the third connecting rod, and a distance L1 between the second rotation center and the third rotation center meets: L1≤20 millimeters; and the fourth connecting rod rotates around a sixth rotation center relative to the fifth connecting rod, the fifth connecting rod rotates around a seventh rotation center relative to the sixth connecting rod, and a distance L2 between the sixth rotation center and the seventh rotation center meets: L2≤20 millimeters.

3. The electronic device according to claim 2, wherein the first connecting rod rotates around a first rotation center relative to the base, the third connecting rod rotates around a fourth rotation center relative to the base, and a distance L3 between the first rotation center and the fourth rotation center meets: L3≤5 millimeters; and
the fourth connecting rod rotates around a fifth rotation center relative to the base, the sixth connecting rod rotates around an eighth rotation center relative to the base, and a distance L4 between the fifth rotation center and the eighth rotation center meets: L4≤5 millimeters.

4. The electronic device according to claim 3, wherein there is a first included angle between a connection line between the first rotation center and the fourth rotation center and a first support surface of the first body part, there is a second included angle between a connection line between the fifth rotation center and the eighth rotation center and a second support surface of the second body part, and when the electronic device is unfolded, the first support surface of the first body part and the second support surface of the second body part are located on two sides of the foldable assembly.

5. The electronic device according to claim 4, wherein the first included angle meets: the first included angle≤25°, and the second included angle meets: the second included angle≤25°.

6. The electronic device according to any one of claims 3 to 5, wherein a distance L5 between the first rotation center and the second rotation center meets: L5≤4 millimeters; and
a distance L6 between the fifth rotation center and the sixth rotation center meets: L6≤4 millimeters.

7. The electronic device according to any one of claims 1 to 6, wherein in a process in which the first body part and the second body part are unfolded or folded relative to each other, the first connecting rod and the second connecting rod are capable of rotating in opposite directions relative to the base, the fourth connecting rod and the fifth connecting rod are capable of rotating in opposite directions relative to the base, the first body part is fastened to the second connecting rod, and the second body part is fastened to the fifth connecting rod.

8. The electronic device according to claim 7, wherein the first connecting rod rotates around the second rotation center relative to the second connecting rod, the third connecting rod rotates around the third rotation center relative to the second connecting rod, the third connecting rod rotates around the fourth rotation center relative to the base, and the third rotation center is located on a side that is of a connection line between the second rotation center and the fourth rotation center and that is away from the base; and
the fourth connecting rod rotates around the sixth rotation center relative to the fifth connecting rod, the sixth connecting rod rotates around the seventh rotation center relative to the fifth connecting rod, the sixth connecting rod rotates around the eighth rotation center relative to the base, and the seventh rotation center is located on a side that is of a connection line between the sixth rotation center and the eighth rotation center and that is away from the base.

9. The electronic device according to claim 7 or 8, wherein the third connecting rod is provided with first avoidance space, and the first avoidance space is used to avoid the first connecting rod; and the sixth connecting rod is provided with second avoidance space, and the second avoidance space is used to avoid the fourth connecting rod.

10. The electronic device according to any one of claims 7 to 9, wherein at least one of the base, the first connecting rod, the second connecting rod, the third connecting rod, the fourth connecting rod, the fifth connecting rod, and the sixth connecting rod comprises one plate or a plurality of plates that are stacked.

11. The electronic device according to any one of claims 7 to 10, wherein the foldable assembly further comprises a first elastic piece, a first rotatable connecting shaft, and a first fastener, wherein the first rotatable connecting shaft is sequentially inserted into the base, the first connecting rod, the first elastic piece, and the first fastener, the first elastic piece is capable of elastically deforming to provide a motion damping force in a process in which the first connecting rod rotates relative to the base, the first fastener is fastened to the first rotatable connecting shaft for adjusting a mounting deformation amount of the first elastic piece, and the mounting deformation amount of the first elastic piece is a deformation amount of the first elastic piece in a case in which the electronic device is unfolded; and
the foldable assembly further comprises a second elastic piece, a second rotatable connecting shaft, and a second fastener, wherein the second rotatable connecting shaft is sequentially inserted into the base, the fourth connecting rod, the second elastic piece, and the second fastener, the second elastic piece is capable of elastically deforming to provide a motion damping force in a process in which the fourth connecting rod rotates relative to the base, the second fastener is fastened to the second rotatable connecting shaft for adjusting a mounting deformation amount of the second elastic piece, and the mounting deformation amount of the second elastic piece is a deformation amount of the second elastic piece in a case in which the electronic device is unfolded.

12. The electronic device according to claim 11, wherein the foldable assembly further comprises a clamping member, the clamping member is located between the first connecting rod and the first elastic piece, a clamping structure is formed between the clamping member and the first connecting rod, the first rotatable connecting shaft comprises a first shaft body and a second shaft body that are connected to each other, the first shaft body is inserted into the base and the first connecting rod, the second shaft body is at least partially located in the first connecting rod, and an outer diameter of the second shaft body is less than an outer diameter of the first shaft body; or
the clamping member is located between the fourth connecting rod and the second elastic piece, a clamping structure is formed between the clamping member and the fourth connecting rod, the second rotatable connecting shaft comprises a third shaft body and a fourth shaft body that are connected to each other, the third shaft body is inserted into the base and the fourth connecting rod, the fourth shaft body is at least partially located in the fourth connecting rod, and an outer diameter of the fourth shaft body is less than an outer diameter of the third shaft body.

13. The electronic device according to any one of claims 1 to 6, wherein in a process in which the first body part and the second body part are unfolded or folded relative to each other, the third connecting rod and the second connecting rod are capable of rotating in a same direction relative to the base, the sixth connecting rod and the fifth connecting rod are capable of rotating in a same direction relative to the base, the first body part is fastened to the third connecting rod, and the second body part is fastened to the sixth connecting rod.

14. The electronic device according to claim 13, wherein the electronic device further comprises a first support member and a second support member, the first support member is fastened to the second connecting rod, and the second support member is fastened to the fifth connecting rod; and
when the electronic device is unfolded, the first support member and the second support member are located on two sides of the base; or when the electronic device is folded, the first support member and the second support member are located on a same side of the base and are away from each other in a direction close to the base.

15. The electronic device according to claim 13 or 14, wherein the base is provided with a first arc-shaped groove, the third connecting rod is provided with a first arc-shaped arm, the first arc-shaped arm is located at an end that is of the third connecting rod and that is rotatably connected to the base, and the first arc-shaped arm is slidably mounted on the first arc-shaped groove; and
the base is provided with a second arc-shaped groove, the sixth connecting rod is provided with a second arc-shaped arm, the second arc-shaped arm is located at an end that is of the sixth connecting rod and that is rotatably connected to the base, and the second arc-shaped arm is slidably mounted on the second arc-shaped groove.

16. The electronic device according to any one of claims 13 to 15, wherein the foldable assembly further comprises a first elastic piece, a first connecting shaft, and a first fastener, wherein the first connecting shaft is sequentially connected to the first connecting rod, the first elastic piece, and the first fastener, the first elastic piece is capable of elastically deforming to provide a motion damping force in a process in which the first connecting rod rotates relative to the base, the first fastener is fastened to the first connecting shaft for adjusting a mounting deformation amount of the first elastic piece, and the mounting deformation amount of the first elastic piece is a deformation amount of the first elastic piece in a case in which the electronic device is unfolded; and
the foldable assembly further comprises a second elastic piece, a second connecting shaft, and a second fastener, wherein the second connecting shaft is sequentially connected to the fourth connecting rod, the second elastic piece, and the second fastener, the second elastic piece is capable of elastically deforming to provide a motion damping force in a process in which the fourth connecting rod rotates relative to the base, the second fastener is fastened to the second rotatable connecting shaft for adjusting a mounting deformation amount of the second elastic piece, and the mounting deformation amount of the second elastic piece is a deformation amount of the second elastic piece in a case in which the electronic device is unfolded.

17. A foldable assembly, wherein the foldable assembly comprises a first connecting rod, a second connecting rod, a third connecting rod, and a base, wherein one end of the first connecting rod is rotatably connected to a first position of the base, the other end of the first connecting rod is rotatably connected to a first position of the second connecting rod, one end of the third connecting rod is rotatably connected to a second position of the base, the other end of the third connecting rod is rotatably connected to a second position of the second connecting rod, the first position of the base is different from the second position of the base, and the first position of the second connecting rod is different from the second position of the second connecting rod; and
the foldable assembly further comprises a fourth connecting rod, a fifth connecting rod, and a sixth connecting rod, wherein one end of the fourth connecting rod is rotatably connected to a third position of the base, the other end of the fourth connecting rod is rotatably connected to a first position of the fifth connecting rod, one end of the sixth connecting rod is rotatably connected to a fourth position of the base, the other end of the sixth connecting rod is rotatably connected to a second position of the fifth connecting rod, the third position of the base is different from the fourth position of the base, and the first position of the fifth connecting rod is different from the second position of the fifth connecting rod.

18. The foldable assembly according to claim 17, wherein the first connecting rod rotates around a second rotation center relative to the second connecting rod, the second connecting rod rotates around a third rotation center relative to the third connecting rod, and a distance L1 between the second rotation center and the third rotation center meets: L1≤20 millimeters; and the fourth connecting rod rotates around a sixth rotation center relative to the fifth connecting rod, the fifth connecting rod rotates around a seventh rotation center relative to the sixth connecting rod, and a distance L2 between the sixth rotation center and the seventh rotation center meets: L2≤20 millimeters.

19. The foldable assembly according to claim 18, wherein the first connecting rod rotates around a first rotation center relative to the base, the third connecting rod rotates around a fourth rotation center relative to the base, and a distance L3 between the first rotation center and the fourth rotation center meets: L3≤5 millimeters; and
the fourth connecting rod rotates around a fifth rotation center relative to the base, the sixth connecting rod rotates around an eighth rotation center relative to the base, and a distance L4 between the fifth rotation center and the eighth rotation center meets: L4≤5 millimeters.

20. The foldable assembly according to claim 19, wherein a distance L5 between the first rotation center and the second rotation center meets: L5≤4 millimeters; and
a distance L6 between the fifth rotation center and the sixth rotation center meets: L6≤4 millimeters.

21. The foldable assembly according to any one of claims 17 to 20, used in a foldable electronic device, wherein the electronic device comprises a first body part, a second body part, and the foldable assembly, the foldable assembly is connected between the first body part and the second body part, and the first body part and the second body part are capable of being unfolded or folded relative to each other via the foldable assembly; and
in a process in which the first body part and the second body part are unfolded or folded relative to each other, the first connecting rod and the second connecting rod are capable of rotating in opposite directions relative to the base, the fourth connecting rod and the fifth connecting rod are capable of rotating in opposite directions relative to the base, the first body part is fastened to the second connecting rod, and the second body part is fastened to the fifth connecting rod.

22. The foldable assembly according to any one of claims 17 to 20, used in a foldable electronic device, wherein the electronic device comprises a first body part, a second body part, and the foldable assembly, the foldable assembly is connected between the first body part and the second body part, and the first body part and the second body part are capable of being unfolded or folded relative to each other via the foldable assembly; and
in a process in which the first body part and the second body part are unfolded or folded relative to each other, the third connecting rod and the second connecting rod are capable of rotating in a same direction relative to the base, the sixth connecting rod and the fifth connecting rod are capable of rotating in a same direction relative to the base, the first body part is fastened to the third connecting rod, and the second body part is fastened to the sixth connecting rod.
